(19) Europäisches Patentamt

European Patent Office

Office européen des brevets

(11) **EP 1 510 917 A1**

(12) **DEMANDE DE BREVET EUROPEEN**

(43) Date de publication:
**02.03.2005 Bulletin 2005/09**

(51) Int Cl.$^7$: **G06F 9/50**

(21) Numéro de dépôt: **03292111.6**

(22) Date de dépôt: **27.08.2003**

(84) Etats contractants désignés:
**AT BE BG CH CY CZ DE DK EE ES FI FR GB GR
HU IE IT LI LU MC NL PT RO SE SI SK TR**
Etats d'extension désignés:
**AL LT LV MK**

(71) Demandeur: **FRANCE TELECOM
75015 Paris (FR)**

(72) Inventeur: **Delenda, Arnaud
75015 Paris (FR)**

(74) Mandataire: **Hassine, Albert
Cabinet Plasseraud
65/67 rue de la Victoire
75440 Paris Cedex 09 (FR)**

(54) **Procédé pour allouer en temps réel une ressource entre plusieurs utilisateurs au moyen d'un mécanisme d'enchères**

(57)    Pour allouer une ressource entre n utilisateurs, on procède à une commande par enchères en déterminant, en particulier, la quantité de ressource allouée à chaque utilisateur en un seul tour d'enchère. A cet effet, on calcule une grandeur d'équilibre $p^*$ à partir de la relation $s(p^*) = Q$, dans laquelle Q est la quantité de ressource totale disponible et S est la somme de n fonctions de demande $s_i(p)$ respectives des n utilisateurs, ces fonctions de demande étant positives, strictement décroissantes et continues. On calcule ensuite la quantité $a_i$ à allouer, avec cette grandeur d'équilibre $p^*$, à chaque utilisateur i à partir de sa fonction de demande si telle que $a_i = s_i(p^*)$.

**Description**

L'invention concerne un procédé pour allouer en temps réel une ressource d'un réseau, notamment de télécommunication, entre plusieurs utilisateurs au moyen d'une commande par enchères.

Dans la technique des enchères, un client acheteur peut agir par l'intermédiaire de son agent acheteur (par exemple un automate ou un logiciel).

En référence au vocabulaire de la technique des enchères, on entend par « *agent acheteur* » ou encore plus simplement par « *acheteur* » un agent logique, tel qu'un agent logiciel ou un automate, apte à mettre en oeuvre, pour le compte du client acheteur, une procédure automatique entrant dans la mise en oeuvre d'une commande par enchères à travers un réseau, notamment de télécommunication. Ainsi, on parlera d'acheteur pour désigner indistinctement le client ou l'agent acheteur ou encore l'utilisateur de la ressource que fournit le système de commande par enchères selon le domaine d'application de la vente par enchères.

De la même façon, pour simplifier le vocabulaire on désignera par le terme « *vendeur* », le vendeur de ressource à proprement parler (l'opérateur de télécommunication par exemple).

L'agent médiateur ou organisateur des enchères est également dénommé commissaire-priseur.

Il faut noter cependant que le domaine dans lequel s'inscrit l'étude des mécanismes d'enchère est la théorie des jeux d'où la tendance à appeler « *joueurs* » les acheteurs participant à l'enchère.

L'invention s'applique à tout système d'allocation d'une ressource divisible quantitativement dès lors que cette ressource est limitée en quantité et qu'un ou plusieurs acheteurs requièrent à un moment donné une certaine quantité de cette ressource et que la demande globale dépasse l'offre.

En effet, que cela soit au niveau d'un système de gestion d'un réseau de télécommunication ou d'un équipement partagé par plusieurs acheteurs, il se pose le problème du partage des ressources fournies par ce système ou cet équipement entre ces différents acheteurs et de la mise en oeuvre du mécanisme de commande de cette allocation.

L'une des difficultés que doit résoudre un tel mécanisme est d'effectuer un arbitrage équitable entre les différents acheteurs dès lors que la demande cumulée des acheteurs dépasse le volume total de ressource disponible (à savoir l'offre). Lorsque la demande des acheteurs reste inférieure à l'offre, on peut allouer aux acheteurs la totalité de ce qu'ils demandent et aucun problème ne se pose.

On indique ici que la ressource sollicitée peut être aussi bien une durée de télécommunication requise dans un réseau de téléphonie radiocellulaire, qu'un nombre donné d'octets à télécharger d'un serveur distant via un réseau étendu, par exemple de type IP. Une autre application possible est l'allocation de mémoire vive d'un appareil informatique (par exemple un ordinateur de type PC) à affecter à plusieurs tâches en cours, l'appareil informatique étant animé par un système d'exploitation capable de gérer simultanément les déroulements respectifs de ces tâches (tel que *WINDOWS*™). On comprendra aussi qu'une autre application possible consiste à agencer en réseau plusieurs terminaux de capacités de traitement respectives différentes avec un serveur capable de diffuser notamment des données audiovisuelles dont la qualité de restitution dépend des capacités de traitement des terminaux.

De nombreuses techniques existent à ce jour pour réaliser l'allocation de ressources.

- On peut signaler d'abord tous les mécanismes qui fonctionnent à partir de l'ordre d'arrivée FIFO, LIFO, ... Pour un mécanisme FIFO (First In First Out), ce sont les utilisateurs ayant formulé le plus tôt leur demande qui sont servis. Pour un mécanisme LIFO (Last In First Out) c'est au contraire le dernier à avoir formulé une demande qui est servi.
- Il existe également d'autres mécanismes qui n'excluent aucun acheteur : l'arbitrage s'effectue au niveau de la quantité de ressource allouée à chaque acheteur. Comme règle d'arbitrage, on utilise par exemple une règle définissant les quantités allouées au prorata des quantités demandées.

Ces mécanismes ne sont pas toujours très efficaces ou équitables, notamment d'un point de vue économique. En effet, l'adéquation entre l'offre (la quantité offerte et le prix) et la demande (quantités désirées ou obtenues) peut être difficile à obtenir.

Avec de tels mécanismes, il existe des périodes creuses où la demande reste plus faible que la quantité de ressource disponible et des périodes chargées où la demande excède très largement les ressources disponibles.

Dans le cas de ces deux situations limites, les mécanismes d'allocation qui viennent d'être décrits ne sont pas équitables, selon des principes de base qui découlent des théories économiques. En particulier, ces mécanismes ne sont pas optimaux du point de vue de l'efficacité économique.

De plus, ces mécanismes sont relativement statiques. Ils ne sont pas capables de s'adapter et de rester pertinents lorsque l'offre et la demande de ressource de la part des acheteurs subissent de fortes et rapides fluctuations.

Une solution possible pour satisfaire ce critère d'efficacité économique et d'adaptabilité du processus d'allocation de ressource, est d'utiliser une technique d'allocation basée sur des mécanismes de marché et plus spécifiquement sur des enchères.

On rappelle tout d'abord quelques principes généraux concernant une vente par enchères.

Dans une enchère, un vendeur (acheteur intermédiaire ou détenteur de la ressource) offre à la vente un bien. Il fait face à plusieurs acheteurs en concurrence pour l'acquisition de ce bien. L'organisation de l'enchère s'effectue sous la responsabilité d'un agent de médiation (commissaire-priseur) qui assure si nécessaire la neutralité du mécanisme entre différents agents participants (acheteurs et vendeurs). On signale à ce propos qu'il est possible que la fonction de commissaire-priseur soit assurée par l'agent vendeur.

Dans les applications visées par la présente invention, le bien étant la quantité de ressource que l'on cherche à allouer, on considère que ce bien est divisible quantitativement.

On s'intéresse donc ici plus particulièrement aux enchères multi-unitaires (le bien est divisible). La ressource que l'on considère est donc constituée de plusieurs unités.

Les enchères avec une seule unité de bien correspondent au cas habituel d'enchère que l'on peut rencontrer dans les salles de ventes réelles ou virtuelles sur Internet.

Les enchères multi-unitaires se décomposent en deux familles : celle où sont mis en vente des biens de nature identique et celle où sont mis en vente des biens de natures différentes.

Il existe en pratique quatre grandes familles d'enchères :

- les enchères ascendantes (ouvertes ou anglaises),
- les enchères descendantes (hollandaises),
- les enchères scellées au premier prix,
- et les enchères scellées au second prix, dites "*de Vickrey*"

Les deux premières familles sont itératives et séquentielles, tandis que les deux autres font appel à des actions simultanées et uniques de la part des acheteurs.

Sous certaines hypothèses concernant l'information dont disposent les acheteurs, ces quatre familles peuvent, par équivalence, être ramenées à deux types : les enchères au premier prix et celles au second prix.

Pour chacune de ces enchères, les acheteurs misent sous prix scellés. Pour un seul bien en vente, le vainqueur est, dans les deux cas, celui qui a émis la mise la plus élevée. Pour des enchères au premier prix, l'acheteur paie la mise qu'il a annoncée, tandis que pour celles au second prix, il paie la seconde mise la plus élevée après la sienne. Les enchères au second prix ont un grand avantage par rapport aux enchères au premier prix.

William Vickrey (Vickrey W., *Counterspeculation, Auctions and Competitive Sealed Tenders,* Journal of Finance, XVI, 8-37, 1961) a démontré que la stratégie dominante d'un acheteur consiste à miser sa véritable évaluation du prix du bien (i.e. aucune autre stratégie ne peut lui procurer un plus fort gain quelles que soient les stratégies mises en place par ses concurrents). On indique à ce propos que le gain d'un acheteur est la différence entre l'évaluation d'un acheteur pour le bien et le prix qu'il paie effectivement pour ce bien. On dit que l'enchère de Vickrey au second prix est autorévélatrice vis-à-vis des agents acheteurs : elle les oblige à dire la vérité sur leur fonction d'évaluation du bien car c'est leur intérêt.

On comprendra ainsi que l'enchère au second prix de Vickrey est la plus équitable, tant pour l'acquéreur et le vendeur que pour les autres participants à l'enchère.

Comme cela a été précisé, on s'intéresse ici plus précisément aux enchères multi-unitaires. On peut citer à titre d'exemple la théorie développée par Klemperer (Klemperer P., *Auction Theory: A Guide to the Literature,* Journal of Economic Surveys, 13 (3), 227-86, 1999).

Malheureusement, la plupart des travaux effectués et référencés sur les enchères multi-unitaires ne concernent que les propriétés théoriques de ces enchères.

Quelques autres travaux portent sur des enchères qui se sont déroulées en général à l'instigation des organismes publics ou de régulation au cours desquelles certaines ressources rares ou droits d'usage ont été mis en vente : un exemple important concerne les droits d'exploitation des fréquences de radiotélécommunication fréquences GSM, GPRS ou UMTS.

Dans un cas comme dans l'autre, il n'y a pas de mécanisme concret d'enchère qui soit proposé pour commander le processus d'allocation de la ressource.

On ne connaît à ce jour qu'un seul processus concret répondant au problème auquel le déposant s'est intéressé.

Il s'agit d'un mécanisme d'enchère que l'on dénommera dans la suite par « *PSP* » acronyme de « *Progressive Second Price* » proposé et testé numériquement par Nemo Semret : Semret N., *Market Mechanisms for Network Resource Sharing,* Philosophy Doctorate à Columbia, 1999, à l'occasion d'un travail de thèse à l'université de Columbia en 1999.

« *PSP* » est un mécanisme d'enchère qui cherche à généraliser le principe de Vickrey au cas d'une ressource multi-unitaire.

Par mise en oeuvre du principe d'exclusion-compensation (c'est le principe qui sous-tend les propriétés d'autorévélation des enchères de Vickrey) au cas d'un bien multi-unitaire, un « *joueur* » qui obtient une certaine quantité de ressource paie le prix qu'étaient prêts à payer ceux à qui il a fait perdre par sa présence une certaine quantité de ressource. La totalité de cette quantité correspond au plus à la quantité qu'il a obtenue. Ce sont bien entendu les « *joueurs* » ayant fait les plus hautes enchères qui obtiennent le bien.

Ce mécanisme d'enchère PSP a donné lieu à une demande de brevet publiée 28 septembre 2000 sous le numéro WO 00/57323, pour la commande et la tarification d'une ressource.

Le mécanisme d'allocation et tarification d'une ressource défini par les enchères PSP s'effectue au travers d'un processus de négociation itératif entre trois types d'intervenants chacun caractérisé par des objectifs distincts :

- l'agent vendeur de la ressource qui cherche à vendre cette ressource au meilleur prix (c'est à dire au prix qui maximisera son revenu et donc au prix le plus élevé possible),
- des agents acheteurs qui, eux, souhaitent obtenir une certaine quantité de cette ressource aux meilleures conditions. Une meilleure condition est caractérisée par un couple (quantité, prix) et elle dépend de chaque joueur,
- l'agent médiateur (ou commissaire-priseur) dont l'objectif est de réussir à satisfaire au mieux les deux précédentes classes intervenant.

Le rôle du commissaire-priseur peut être tenu par le vendeur de la ressource.

Formellement, ces agents sont des entités économiques : individus ou groupe d'individus, utilisateurs individuels, entreprises, ou autre groupement d'intérêt.

Du point de vue de la mise en oeuvre pratique du processus dans un équipement, ces agents sont en fait représentés par des automates ou agents informatiques (des logiciels par exemple) qui s'échangent de l'information, dialoguent et négocient entre eux pour l'allocation de la ressource. Cette négociation est bien entendu tributaire des desiderata, évaluations et stratégies que chaque entité aura pu spécifier (c'est à dire programmer) à son automate ou agent logiciel.

Le processus se déroule en dynamique. Des acheteurs peuvent entrer et sortir du jeu à chaque « tour ».

Des enchères (un tour d'enchère) ont lieu par exemple toutes les minutes, heures ou tous les jours (dans ce cas un tour est égal à une minute, une heure ou un jour). L'intervalle de temps peut bien entendu être plus court.

A chaque tour, les acheteurs soumettent leurs mises, le commissaire-priseur détermine l'allocation et la charge à payer de chacun. Le procédé se réitère au tour suivant. Les acheteurs présents au tour précédent peuvent soit quitter l'enchère car ils n'ont plus besoin de ressource, soit abandonner car la ressource est trop chère pour eux. Ils peuvent également modifier leur mise afin d'améliorer leur « *satisfaction* », c'est-à-dire leur gain.

Des acheteurs non présents au tour précédent peuvent aussi entrer dans l'enchère pour essayer d'obtenir une quantité de ressource.

Plus précisément, dans le mécanisme PSP, une mise aux enchères consiste à annoncer une quantité souhaitée et un prix unitaire que l'acheteur se déclare prêt à payer pour obtenir cette quantité. Le commissaire-priseur collecte l'ensemble des mises puis détermine une allocation provisoire de la ressource pour chacun et la somme à payer correspondante. En fonction de cette allocation et du prix payé, chaque acheteur décide s'il a ou non intérêt à modifier son enchère précédente. S'il est insatisfait, il renvoie une contre-proposition au commissaire-priseur. Celui-ci (c'est-à-dire en fait le mécanisme mis en oeuvre) recalcule l'allocation et le prix en tenant compte de toutes les contre-propositions des acheteurs (tout en conservant les dernières propositions des acheteurs satisfaits).

Dans le cas où l'ensemble des acheteurs reste constant (aucun départ ou arrivée) et que les joueurs conservent ce qu'on appelle leur « *fonction d'utilité* » (représentant simplement leur gain), l'itération de ce processus de négociation converge vers une solution « *optimale* » pour l'ensemble des joueurs. Aucun n'a intérêt à changer sa mise sous peine de voir sa fonction d'utilité (ou son gain) baisser. On précise que le gain d'un acheteur i est représenté par sa fonction d'utilité $g_i$. On définit aussi une « *fonction d'évaluation* » (notée $U_i$ ci-après) d'un acheteur i : elle représente le gain de l'acheteur i, auquel s'ajoute le prix $C_i$ effectivement payé par cet acheteur i ($U_i = g_i + C_i$).

Bien entendu, dans ce processus itératif, des acheteurs satisfaits pour une étape intermédiaire peuvent devenir insatisfaits suite aux modifications ultérieures des allocations. Ils peuvent à leur tour revenir dans le processus de négociation.

En théorie, ce mécanisme d'enchère PSP aboutit bien à un équilibre, mais présente des inconvénients.

Tout d'abord, la vitesse de convergence n'est pas très satisfaisante : même en supposant un nombre constant d'acheteurs, il faut beaucoup d'itérations au processus de négociation pour atteindre l'équilibre vérifiant la satisfaction maximale de tous les acheteurs.

D'une manière opérationnelle, ce défaut de convergence se traduit :

- soit par une volumétrie de messages importante entre les acheteurs et le commissaire-priseur (trafic de signalisation important dans le système) et beaucoup de calculs effectués par les acheteurs et le commissaire-priseur dans le cas où l'on décide d'augmenter la fréquence d'itérations afin d'atteindre plus rapidement l'équilibre,

- soit par une dégradation du processus par rapport à son équilibre optimal si on limite la fréquence des renégociations (toutes les minutes ou plus). Les acheteurs ne peuvent renvoyer de contre enchère avant ce délai minimal.

Dans le cas d'un fonctionnement en mode dynamique, les acheteurs entrent et sortent du système en continu : le temps entre deux renégociations peut devenir du même ordre de grandeur que le temps moyen entre l'arrivée ou le départ d'un nouvel acheteur. Dans ces conditions, le processus de négociation itératif de PSP n'atteindra jamais l'équilibre de satisfaction maximale des acheteurs. Il sera en permanence dans un état transitoire possiblement éloigné de l'état d'équilibre optimal.

Un autre inconvénient est que le processus PSP tel que décrit par Nemo Semret permet que des acheteurs forment une coalition pour payer moins. Il est de même possible au vendeur d'agir sur le mécanisme afin de maximiser son revenu en fonction des enchères annoncées par les autres acheteurs.

Ces deux inconvénients occasionnés par le caractère itératif du mécanisme posent problème par rapport à l'impartialité que doit impérieusement respecter tout mécanisme d'enchères.

La présente invention a pour but de proposer un procédé n'ayant pas les inconvénients de l'état de la technique.

Plus généralement, un autre but de la présente invention est de transposer la technique des enchères, dans un domaine économique, à l'allocation d'une ressource physique (quantité de mémoire partagée, téléchargement de données, ou autre) de façon équitable entre plusieurs utilisateurs, selon des critères physiques et concrets (durée demandée pour un téléchargement, qualité demandée du service alloué, ou autre, comme on le verra plus loin).

Un autre but de la présente invention est d'enrichir la signalisation des conditions d'acquisition de la ressource, cette signalisation étant destinée aux utilisateurs.

La présente invention a pour objet un procédé d'allocation d'une ressource entre n utilisateurs au travers d'une commande par enchères principalement caractérisé en ce qu'il comporte une étape de détermination de la quantité de ressource allouée à chaque utilisateur en un seul tour d'enchère, cette étape comprenant :

- le calcul d'une grandeur d'équilibre $p^*$ à partir de la somme $S$ de n fonctions de demande de ressource $s_i(p)$ respectives des n utilisateurs, ces fonctions de demande étant définies en fonction de la grandeur p, positives, décroissantes et continues, au moyen de la relation $S(p^*) = Q$, dans laquelle :

 ■ $Q$ est la quantité de ressource disponible, et
 ■ $S(p)$ est la demande totale correspondant à la somme des demandes $s_i(p)$ de chaque utilisateur pour chaque valeur de la grandeur p, et s'exprime par :

$$S(p) = s_1(p) + s_2(p) + ... + s_i(p) + ... + s_n(p),$$

- le calcul de la quantité $a_i$ à allouer pour cette grandeur d'équilibre $p^*$ à chaque utilisateur i à partir de sa fonction de demande $s_i$, par application de la relation $a_i = s_i(p^*)$.

Le procédé peut ensuite se poursuivre par une étape d'allocation de ressource, proprement dite, en fonction des quantités $a_i$ calculées.

On comprendra que la grandeur p représente, en termes simples, une concession qu'un utilisateur est prêt à accorder pour obtenir une quantité q de la ressource. Cette concession peut aussi bien être une certaine somme monétaire (un prix à payer), qu'une durée d'attente pour télécharger un fichier, ou encore une qualité moindre de la ressource allouée (par exemple un rapport signal sur bruit inférieur à une valeur maximale en téléphonie radiocellulaire, ou encore une concession sur la qualité d'image d'une diffusion audiovisuelle sur un réseau étendu de type IP).

Selon une autre caractéristique de l'invention, la fonction de demande donne la valeur de la demande q d'un utilisateur en fonction de la grandeur marginale p que cet utilisateur est prêt à concéder pour une tranche de la ressource comprise entre q et $q+\delta q$, $\delta q$ étant une petite quantité.

Par exemple, lorsque la grandeur p représente un prix à payer, la fonction de demande donne la valeur de la demande q d'un utilisateur en fonction du prix marginal que cet utilisateur est prêt à payer pour une tranche de la ressource comprise entre q et $q+\delta q$, alors que, plus classiquement, une fonction de demande donne la quantité q de ressource que l'utilisateur est prêt à acquérir en fonction d'un prix moyen de la ressource. Le prix marginal représente donc le prix unitaire que l'utilisateur est prêt à payer pour la m-ième tranche $\delta q$ d'une quantité donnée q comportant m tranches en tout. Par extension, dans le cas où la grandeur p représente une durée d'attente de téléchargement, la « *durée marginale* » représente le temps que l'utilisateur est prêt à attendre pour télécharger le n-ième octet (ou un petit nombre d'octets $\delta q$ prédéterminé) d'une quantité donnée q comportant n octets en tout (ou $n.\delta q$ octets en tout), comme on le verra plus loin. De manière générale, on parlera donc d'une « *concession marginale* » dans les revendications ci-après.

Pratiquement, la fonction de demande est construite à partir d'une fonction d'évaluation U, dépendante de la quantité q, et plus exactement à partir de la fonction d'évaluation marginale U' qui est la dérivée de la fonction d'évaluation U par rapport à la quantité q.

Les fonctions d'évaluation U se caractérisent en répondant aux conditions suivantes :

■ Ui = 0 pour q=0,
■ $U_i$ est dérivable et concave,
■ $U'_i \geq 0$ est décroissante et continue.

Plus précisément, $U'_i$ est strictement décroissante lorsqu'elle est strictement positive et reste nulle lorsqu'elle atteint l'axe des abscisses q.

Dans un mode de réalisation préféré, le procédé d'allocation comporte une étape supplémentaire de signalisation destinée à l'utilisateur lui indiquant la quantité de ressource $a_i$ qui peut lui être effectivement attribuée et la concession $C_i$ à prévoir pour obtenir cette quantité de ressource.

Préférentiellement, l'étape de signalisation comprend un calcul de la concession totale $C_i$ pour l'obtention de la quantité $a_i$ proposée à un utilisateur i, à partir de sa fonction de demande $s_i$, ce calcul se faisant à l'aide de la relation :

$$C_i = \sum_{j \neq i} \int_{a_j^s}^{a_j^0} s_j^{-1}(p) dp$$

et reposant sur le principe d'exclusion/compensation selon lequel, pour l'utilisateur j :

- $a_j^s$ représente son allocation effective en présence de l'utilisateur i, et
- $a_j^0$ (supérieure à $a_j^s$) représente l'allocation dont l'utilisateur j aurait bénéficié en l'absence de l'utilisateur i,

$s_j^{-1}$ étant les inverses des fonctions de demande des utilisateurs j concurrents de l'utilisateur i.

Dans une réalisation selon laquelle la concession est un prix à payer pour une ressource à allouer, l'étape de signalisation comporte avantageusement une indication de tarification Ci, déduite de la relation ci-avant.
On comprendra ainsi que le procédé au sens de ce mode de réalisation ne correspond aucunement à une simple méthode dans le domaine des activités économiques, considérée en tant que telle, mais plutôt à un procédé pour améliorer la signalisation destinée aux utilisateurs d'une ressource, en indiquant en particulier la quantité de ressource qu'il est possible de leur allouer, ainsi que la tarification prévue pour cette quantité de ressource.

Dans une forme de réalisation préférée de l'invention appliquée à un réseau arborescent formé d'un ensemble E comportant N arcs, chaque arc e du réseau disposant de sa propre quantité totale de ressource $Q_e$, le procédé comporte les étapes suivantes :

a) pour chaque utilisateur i, identifier l'ensemble $E_i$ des arcs k du réseau dans le chemin que demande à emprunter l'utilisateur i,

b) obtenir sa fonction de demande

$$s_i\left(\sum_{k \in E_i} p_k\right)$$

visant l'ensemble $E_i$ des arcs k, préférentiellement contigus, qu'il demande à emprunter,

c) répéter les étapes a) et b) pour l'ensemble I des utilisateurs i sollicitant le réseau,

d) classer les fonctions de demande par arc e du réseau, en fonction de la quantité totale de ressource $Q_e$ disponible sur cet arc e, pour mettre en forme un système de N équations à N inconnues $p_k$ du type :

$$\begin{cases} \forall e \in E, \\ \displaystyle\sum_{i \in I / e \in E_i} s_i \left( \sum_{k \in E_i} p_k \right) = Q_e \end{cases}$$

e) résoudre le système d'équations pour obtenir N grandeurs d'équilibre $p^*_e$ associées chacune à un arc e du réseau, et

f) estimer, pour chaque utilisateur i, préférentiellement une même quantité $a_i$ de la ressource sur chaque arc k parmi l'ensemble des arcs $E_i$ qu'emprunte cet utilisateur i, déduite de sa fonction de demande $s_i$ appliquée à la somme des grandeurs d'équilibre $p^*_k$ associées chacune à un arc k emprunté, selon la relation :

$$\forall i \in I, \quad a_i = s_i \left( \sum_{k \in E_i} p^*_k \right)$$

L'invention a également pour objet un système d'allocation d'une ressource entre n utilisateur au travers d'une commande par enchères, principalement caractérisé en ce qu'il comprend des moyens de détermination de la quantité de ressource allouée à chaque agent acheteur en un seul tour d'enchère, ces moyens comprenant un moyen de calcul :

\* d'une grandeur d'équilibre p\* à partir de la somme S des n fonctions de demande $s_i(p)$ des utilisateurs définies en fonction d'une grandeur p, ces fonctions de demande étant positives décroissantes et continues,
     au moyen de la relation S(p\*)=Q,

   - dans laquelle Q est la quantité de ressource disponible, et
   - S(p) est la demande totale correspondant à la somme des demandes $s_i(p)$ de chaque utilisateur pour chaque valeur de la grandeur p,

$$S(p) = s_1(p) + s_2(p) + ... + s_i(p) + s_n(p),$$

\* et de la quantité $a_i$ à allouer pour cette grandeur d'équilibre p\* à chaque utilisateur i à partir de sa fonction de demande $s_i$ à partir de la relation :

$$a_i = s_i(p^*).$$

Dans le cas où l'invention s'applique au domaine des télécommunications, la ressource à allouer peut être de la bande passante ou les ports d'un équipement d'accès à un réseau.
Dans une forme de réalisation préférée de l'invention appliquée à un réseau arborescent et formé d'un ensemble E comportant N arcs, chaque arc e du réseau disposant de sa propre quantité totale de ressource $Q_e$, le système comporte en outre :

   - des moyens d'identification, pour chaque utilisateur i, de l'ensemble $E_i$ des arcs k du réseau dans le chemin que demande à emprunter l'utilisateur i,
   - des moyens d'analyse de requêtes pour obtenir la fonction de demande

$$s_i \left( \sum_{k \in E_i} p_k \right)$$

de l'utilisateur i, visant l'ensemble $E_i$ des arcs k qu'il demande à emprunter,

- des moyens de calcul pour :

  * résoudre un système d'équations, pour l'ensemble I des utilisateurs i sollicitant le réseau, régissant l'ensemble des fonctions de demande des utilisateurs en fonction des ressources respectives $Q_e$ disponibles sur chaque arc e :

$$\begin{cases} \forall e \in E, \\ \sum_{i \in I / e \in E_i} s_i \left( \sum_{k \in E_i} p_k \right) = Q_e \end{cases}$$

  ledit système comportant N équations à N inconnues $p_k$ et admettant N solutions correspondant à des grandeurs d'équilibre $p^*_e$ associées chacune à un arc e du réseau,

  * et estimer, pour chaque utilisateur i, la ressource $a_i$ à allouer à cet utilisateur, correspondant préférentiellement à sensiblement une même quantité $a_i$ de ressource sur chaque arc k parmi l'ensemble des arcs $E_i$ qu'emprunte l'utilisateur i, et déduite de sa fonction de demande $s_i$ appliquée à la somme des grandeurs d'équilibre $p^*_k$ associées chacune à un arc k emprunté, selon la relation :

$$\forall i \in I, \quad a_i = s_i \left( \sum_{k \in E_i} p^*_k \right)$$

D'autres particularités et avantages de l'invention apparaîtront clairement à la lecture de la description qui est donnée ci-après à titre d'exemple non limitatif et en regard des dessins sur lesquels,

- les figures 1A et 1B, représentent une fonction d'évaluation $U_i$ et sa dérivée $U'_i$ (évaluation marginale),
- les figures 2A et 2B, représentent trois exemples de fonction d'évaluation pour une même quantité maximale ($q_{max}$). et les évaluations marginales correspondantes,
- la figure 2C représente les fonctions de demande correspondant aux fonctions d'évaluation marginale de la figure 2B,
- la figure 2D représente deux exemples particuliers de fonction d'évaluation,
- la figure 2E représente les fonctions de demande correspondant aux fonctions d'évaluation de la figure 2D,
- la figure 3, représente un exemple de fonction de demandes $s_1$, $s_2$ de deux acheteurs,
- la figure 4, illustre schématiquement la méthode de calcul de la tarification pour cet exemple simple avec deux acheteurs,
- la figure 5, illustre le schéma général d'un système de mise en oeuvre du procédé,
- la figure 6, illustre un schéma de réalisation d'agent acheteur,
- la figure 7A illustre un réseau à trois arcs contigus,
- la figure 7B illustre un réseau à trois arcs en étoile, et
- la figure 8 illustre un réseau à deux arcs contigus.

Dans un premier temps, on considère un réseau constitué d'un arc unique entre un point « *entrée* » et un point « *sortie* ».

Par ailleurs, on indique que, dans le mode de réalisation ci-après décrit à titre d'exemple, la grandeur p précitée est un prix d'enchère. Ainsi, la terminologie consacrée dans le domaine des enchères a été conservée et l'on dénomme indistinctement par « *acheteur* », « *agent acheteur* » ou « *joueur* », les utilisateurs qui sollicitent la ressource Q à partager. De même, le rôle de « *commissaire-priseur* » peut être joué, dans une réalisation concrète, par une unité de traitement dédiée connectée à un serveur commandant l'allocation de ressource, comme on le verra plus loin.

Toutefois, dans d'autres variantes de l'invention qui seront aussi décrites à titre d'exemple, cette grandeur p peut être un autre paramètre, tel qu'une durée de téléchargement de données via un réseau étendu, de type IP.

Il faut préciser que chaque fois que l'on parle de « *prix* », il ne s'agit pas d'une somme d'argent dans « *l'absolu* » mais d'un prix par unité de ressource, par exemple un prix par unité de temps d'utilisation. La somme que devra payer le client sera donc le produit entre ce prix unitaire et la durée pendant laquelle il sera resté connecté. On doit bien entendu aussi considérer les variations possibles du prix unitaire pendant la période de connexion. En outre le prix à payer par le client n'est pas nécessairement monétaire. Il peut s'agir de « *crédits* » ou de « *jetons* » que le client acheteur peut avoir acquis à l'occasion de son abonnement à un service ou bien qu'il a pu acheter par l'intermédiaire d'un système comme les cartes prépayées.

Le mécanisme d'enchère proposé pour allouer et, le cas échéant, indiquer le tarif d'une ressource multi-unitaire entre plusieurs utilisateurs repose sur le fait que chaque utilisateur i possède un intérêt pour recevoir une part $a_i$ de la ressource totale Q. Le mécanisme permet d'allouer les « *bonnes* » quantités $a_i$ de la ressource à chacun des utilisateurs pour une charge à payer $C_i$. Dans le procédé proposé, chaque acheteur est conduit à fournir son évaluation réelle pour l'obtention de la quantité de ressource (cas de l'acheteur) ou du prix auquel il est prêt à vendre la ressource (cas du vendeur). En fait, l'agent vendeur est considéré comme un agent acheteur de toute la quantité de ressource Q. Il peut éviter la vente de ressource en dessous d'un prix minimum limite. Le risque de cette opération est qu'une certaine quantité de ressource ne soit pas vendue (puisque achetée par lui-même).

Le mécanisme proposé s'adapte à des variations du nombre d'acheteurs et à leur prédisposition à payer la ressource. Il peut exister des périodes creuses avec peu d'acheteurs et des périodes chargées avec beaucoup plus d'acheteurs.

Le mécanisme proposé autorise alors la régulation de la demande des acheteurs en fonction de l'offre constante de ressource Q au travers d'un prix d'enchère variable.

Pour obtenir une quantité de ressource significative pendant une période chargée, l'acheteur devra accepter de payer un prix élevé. Par contre, dans les périodes creuses, il peut obtenir une grande quantité de ressource pour un prix plus modéré.

Le mécanisme d'enchère selon l'invention n'est pas itératif. Il aboutit à un équilibre de meilleure satisfaction des acheteurs en un seul tour (une seule itération) et dans lequel les acheteurs misent la véritable évaluation qu'ils se font de la valeur de la ressource.

En outre, le mécanisme proposé utilise le principe des enchères de Vickrey au cas multi-unitaire par exploitation du principe de tarification reposant sur l'exclusion-compensation.

Ce mécanisme d'enchère se déroule de la manière suivante :

- un vendeur a une quantité quelconque Q d'une ressource ou bien divisible à vendre.
 Typiquement, dans une application de télécommunication ou réseau de télécommunication, il peut s'agir de bande passante ou bien des portes logiques d'accès à un équipement.
- n acheteurs sont demandeurs, ce qui signifie qu'ils sont en compétition pour le partage de cette ressource. Chacun d'entre eux se positionne sur une fonction d'évaluation $U_i$ de la quantité q qu'il désire avoir.

Il s'agit en fait de l'évaluation par l'acheteur de son intérêt pour une certaine quantité de ressource.

Le choix d'une fonction d'évaluation pourrait être laissé à l'entière liberté des agents acheteurs, mais pour des raisons pratiques de mise en oeuvre, on préfère proposer au client de se positionner sur un choix de fonction d'évaluation prédéfini dans l'automate programmé de négociation.

La fonction d'évaluation $U_i$ du client i permet d'en déduire sa fonction de demande. Concrètement, la fonction de demande d'un acheteur est l'inverse de la dérivée de la fonction d'évaluation. On indique que cette dérivée de la fonction d'évaluation se dénomme « *fonction d'évaluation marginale* ». On commet par conséquent un léger abus de langage car la fonction de demande ainsi construite donne la valeur de la demande q d'un client en fonction du prix marginal que ce client est prêt à payer pour la ressource comprise entre q et q+$\delta$q, ou $\delta$q est une petite quantité, alors que plus classiquement une fonction de demande donne la quantité q de ressource que le client est prêt à acquérir en fonction d'un prix moyen de la ressource.

Le négociateur de la vente collecte les fonctions de demande $s_i(p)$ des différents acheteurs et a connaissance de la quantité Q totale mise en vente.

Pour miser, un acheteur donne sa fonction de demande $s_i(p)$, soit, en pratique, l'inverse de sa fonction d'évaluation marginale pour la ressource.

Ceux-ci peuvent bien entendu annoncer une fonction de demande non sincère (ne disent pas la vérité, i.e. ne traduisant pas leur véritable évaluation de la ressource). Cependant, le procédé selon la présente invention met en oeuvre un mécanisme de calcul d'allocation de ressource et/ou d'indication de tarif qui incite chaque acheteur à miser la vérité car cela maximise la fonction de gain de chaque acheteur.

On rappelle à ce propos que le gain d'un acheteur représente la différence entre son évaluation pour l'acquisition d'une quantité de ressource et le prix qu'il doit payer effectivement pour cette quantité. Le déposant a démontré qu'annoncer sa véritable fonction de demande est pour chaque acheteur une stratégie dominante.

Dans l'approche selon l'invention, chaque acheteur i possède par conséquent une évaluation pour l'acquisition d'une quantité $q_i$ de ressource qui se traduit par une fonction d'évaluation $U_i \geq 0$, cette évaluation est en fait une donnée privée. Le calcul de la dérivée de cette fonction par rapport à la variable q, notée $U'_i$, donne la fonction d'évaluation marginale accordée par l'utilisateur i à l'acquisition d'une unité de ressource supplémentaire. L'inverse de cette dérivée $([U'_i]^{-1})$ est la fonction de demande d'un utilisateur i, donnant la quantité allouée q en fonction du prix unitaire p, notée ci-après $s_i(p)$ ou autrement $f_i(p)$. Elle sera explicitée plus en détail ci-après.

En terme mathématique, la fonction $U_i$ se caractérise en répondant aux conditions suivantes :

- $U_i = 0$ pour q = 0,
- $U_i$ est dérivable et concave,
- $U'_i \geq 0$ est décroissante et continue. C'est la fonction dérivée de la fonction U(i). Plus précisément, elle est positive et strictement décroissante jusqu'à s'annuler. Elle caractérise l'évaluation marginale de l'acheteur i pour la ressource i : c'est-à-dire le prix qu'il est prêt à payer pour obtenir une unité de ressource au-delà de celle qu'il a déjà obtenue.

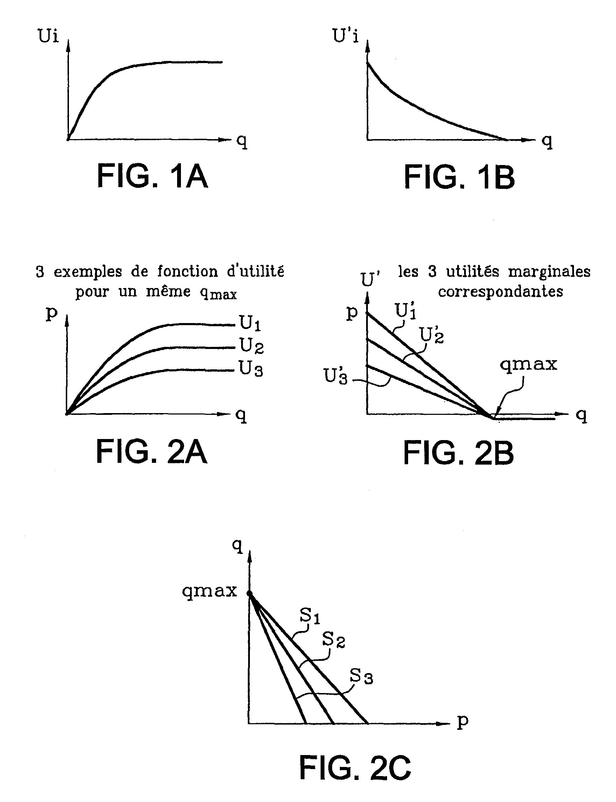

Les figures 1A et 1B illustrent une forme générale des fonctions $U_i$ et $U'_i$.

Comme on peut le voir, la fonction d'évaluation d'un acheteur croit continûment avec la quantité qu'il peut obtenir mais cette croissance est sous-linéaire (concave). C'est à dire qu'au fur et à mesure que la quantité obtenue grandit, l'intérêt pour une unité supplémentaire diminue. A l'extrême, il existe pour chaque utilisateur une quantité de ressource limite (seuil) au-delà de laquelle cet utilisateur n'accorde plus aucun intérêt (i.e. n'est plus prêt à payer) pour obtenir une unité supplémentaire.

Pour chaque étape de négociation (à chaque nouvelle enchère), le commissaire-priseur récolte toutes les fonctions de demande $s_i$ (une fonction par acheteur i).

A partir de ces informations, le commissaire-priseur détermine pour chaque valeur de prix p, la demande totale S qui est la somme des demandes individuelles. Il calcule un prix d'équilibre de marché p* qui égalise l'offre et la demande tel que : S(p*)=Q, Q représente toute la quantité mise en vente : c'est donc l'offre totale.

Ayant ainsi défini le prix de marché p*, le commissaire-priseur peut alors calculer les allocations de ressource $a_1$, $a_2$, ..., $a_i$ ..., $a_n$ pour chaque joueur en procédant au calcul suivant :

$$a_i = s_i(p^*) \text{ pour chaque acheteur (i=1 à n).}$$

Par ce calcul, le commissaire-priseur détermine comme allocation à chaque acheteur, la valeur de sa fonction de demande pour le prix p*.

Le commissaire-priseur renverra à chaque acheteur l'allocation $a_i$ ainsi calculée et les informe également du prix d'équilibre de marché fictif qui sert de base au mécanisme.

Certains acheteurs pourront ne pas être servis (en effet pour le prix p* des utilisateurs j peuvent avoir une demande nulle i.e. $s_j(p^*)=0$).

Cette étape de négociation/allocation est répétée à intervalles réguliers selon le choix fait lors de l'exploitation d'un tel système d'allocation de ressource.

La fréquence de renouvellement de la négociation sera choisie de manière à ne pas être trop importante afin de ne pas utiliser trop de ressources de calcul et/ou encombrer le réseau par des messages de signalisation entre les logiciels acheteurs des utilisateurs et le serveur agissant en tant que « *commissaire-priseur* ». Cette fréquence doit cependant être suffisante pour prendre en compte les évolutions arrivées ou départs d'acheteurs, changement des fonctions de demande des acheteurs en cours et le cas échéant variation de la quantité de ressource disponible.

Une deuxième étape du procédé consiste ensuite à calculer la tarification correspondante c'est-à-dire la détermination des charges à payer pour chaque acheteur i. Cette tarification est obtenue par le résultat du calcul d'intégrale suivant :

$$C_i = \sum_{j \neq i} \int_{a_j^s}^{a_j^0} s_j^{-1}(p)\,dp$$

Cette relation donne le prix total $C_i$ que devra payer l'acheteur i pour l'obtention de la quantité $a_i$ déterminé à l'étape précédente, quand la mise est s. Pour l'acheteur j, $a_j^s$ représente son allocation en cas de présence de l'acheteur i et $a_j^0$ son allocation dans le cas où il serait absent. En effet, si l'acheteur i n'était pas présent, les clients j concurrents se verraient allouer la quantité $a_j^0$, alors qu'ils n'ont que $a_j^s$ dans la situation actuelle du fait de sa présence.

Le calcul de la charge fait intervenir la fonction inverse $s_j^{-1}$ de la fonction de demande $s_j$, des concurrents j, car on cherche un prix en fonction d'une quantité déjà définie et non une quantité en fonction d'un prix.

On va, dans ce qui suit, donner deux exemples de fonction d'évaluation et les fonctions de demande correspondantes.

Il est bien entendu que toute fonction d'évaluation (et de demande) pourra être choisie dès lors qu'elle remplit les conditions énoncées précédemment. Ces fonctions peuvent être caractérisées par m paramètres correspondant par exemple au choix d'un certain nombre de points caractéristiques suite à une discrétisation de la fonction.

Selon un premier exemple, la fonction d'évaluation peut être la fonction polynomiale suivante :

$$U(q) = \frac{min(q,q_{max})^*(q_{max} - 0,5^*min(q,q_{max}))}{\alpha}$$

ce qui donne une fonction de demande S(p)

$$S(p) = max\ (0\ ;\ q_{max} - \alpha^*p)$$

où p est le prix (marginal) que l'acheteur est prêt à payer pour une unité de ressource supplémentaire au delà de q=s(p).

Dans ce premier exemple, chaque acheteur i a une fonction d'évaluation $U_i$ polynomiale (de degré 2) jusqu'au point correspondant à la quantité maximale $q_{max}$ de l'acheteur i, puis cette fonction est constante au-delà.

Selon un autre exemple, la fonction d'évaluation peut être la fonction exponentielle suivante :

$$U(q) = \frac{min(q,q_{max})^*(Ln(q_{max}) - Ln(min(q,q_{max})) + 1)}{\alpha}$$

dans laquelle Ln est le logarithme népérien, ce qui donne une fonction de demande S(p)

$$S(p) = q_{max}^*exp\ (-\alpha^*p)$$

où p est le prix (marginal) que l'acheteur est prêt à payer pour une unité de ressource supplémentaire au delà de q= s(p).

Dans ces deux cas, les fonctions d'évaluation $U_i$ et d'évaluation marginale $U'_i$ (fonction dérivée de $U_i$) et par voie de conséquence les fonctions de demande (fonction inverse de l'évaluation marginale) peuvent être caractérisées par seulement deux paramètres $q_{max}$ et $\alpha$ tels que :

- $q_{max}$ est la quantité maximale de ressource au-delà de laquelle l'agent acheteur n'est plus prêt à payer pour obtenir de la ressource supplémentaire (évaluation marginale nulle) et
- $\alpha$ caractérise le niveau d'intérêt de l'utilisateur pour la ressource. Plus $\alpha$ est grand et plus cet intérêt diminue rapidement avec le prix de la ressource. Il s'agit d'un coefficient indiquant la prédisposition à payer du client.

Si on prévoit d'utiliser plusieurs types de fonctions prédéfinies (fonction 1, 2, 3,... etc), il faudra en fait fournir trois paramètres, les paramètres tels que définis précédemment et un troisième paramètre désignant le type de fonction choisie (fonction 1 ou 2, ou 3 de la liste des fonctions prédéfinies).

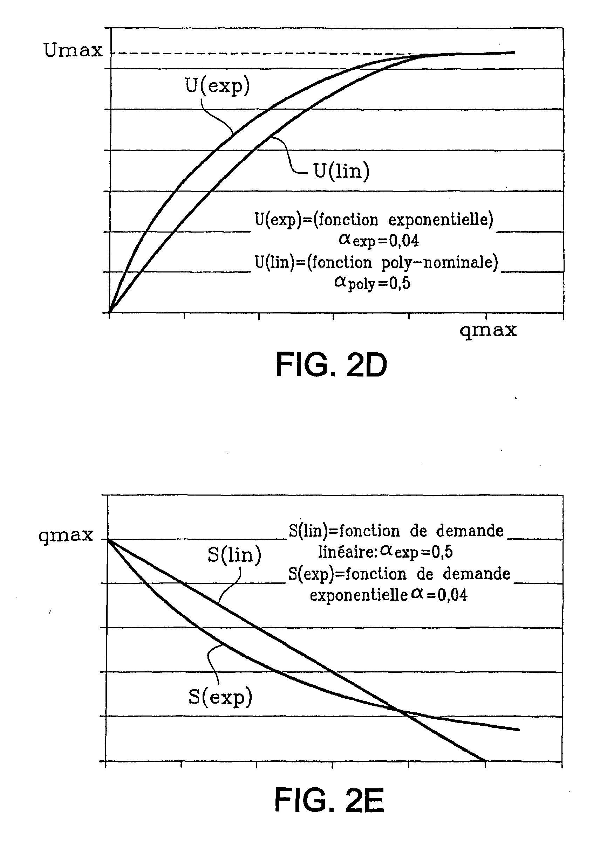

La figure 2D illustre les fonctions d'évaluation correspondant aux deux exemples précédents. La figure 2E illustre les fonctions de demande correspondant aux deux fonctions d'évaluation de la figure 2D.

Dans ces exemples, les acheteurs n'ont plus besoin d'annoncer au commissaire-priseur des fonctions de demande entièrement définies pour toutes les quantités possibles mais seulement les deux paramètres $q_{max}$ et $\alpha$ (chaque acheteur mise sa fonction de demande).

La mise consiste alors à donner deux paramètres, à savoir, dans ce cas, le couple ($q_{max}$, $\alpha$).

Dans le cas d'un mécanisme d'enchère pour de la bande passante, la valeur de $q_{max}$ correspond au débit

maximum requis par l'utilisateur. Le coefficient $\alpha$ quant à lui donne l'aspiration de l'utilisateur pour obtenir ce débit maximal (prêt à payer plus pour obtenir plus).

Les figures 2A et 2B montrent l'allure prise par la fonction d'évaluation et sa dérivée pour trois acheteurs ayant la même valeur de quantité maximale.

Le coefficient $\alpha$ correspond donc à la pente des droites (fonction de demande) de la figure 2C.

Cependant, plutôt que de laisser l'utilisateur choisir une fonction d'évaluation quelconque, qui possède les propriétés de croissance et continuité énoncées précédemment, on préférera donc proposer à l'acheteur de se positionner sur un choix limité de possibilité.

Ce choix comportera, selon ces deux paramètres, le débit maximal requis par l'acheteur et le niveau de prédisposition de l'acheteur du prix à payer pour obtenir au mieux ce débit maximal.

Il peut également être prévu qu'un choix de plusieurs paramètres de prédisposition soit proposé.

On peut par exemple prévoir de définir plusieurs classes de service : « *or* » pour une valeur de $\alpha$ prédéterminée, « *argent* » pour une autre valeur ou « *bronze* » pour encore une autre valeur.

La classe « *or* » correspond à une plus forte prédisposition à payer que la classe « *argent* » qui correspond elle-même à une plus forte prédisposition à payer que la classe « *bronze* ».

On va maintenant détailler ces mécanismes pour mieux les comprendre, au moyen d'un exemple simple dans lequel il n'y a que deux acheteurs.

Dans l'exemple qui est donné, l'acheteur 1 a une quantité maximale $q_{max}$ plus élevée que celle de l'acheteur 2 mais sa prédisposition à payer $\alpha$ est plus faible (il s'agit des valeurs que s'est fixé l'acheteur au moment de l'enchère). A partir de ces informations collectées, le commissaire priseur calcule (pour chaque valeur de prix p) la somme S de ces deux fonctions de demande.

Le commissaire-priseur peut alors déterminer un prix d'équilibre de marché qui égalise l'offre et la demande. Ce prix correspond à la valeur de p* tel que S(p*) = Q. En effet S(p*) correspond bien à la demande totale pour le prix p* et Q est par définition la quantité de ressource offerte. Connaissant p*, on détermine les allocations $a_1$ et $a_2$ pour chacun des acheteurs. Chaque acheteur obtient la quantité correspondante à sa fonction de demande pour le prix p* à savoir $a_1 = s_1(p^*)$ et $a_2 = s_2(p^*)$ .

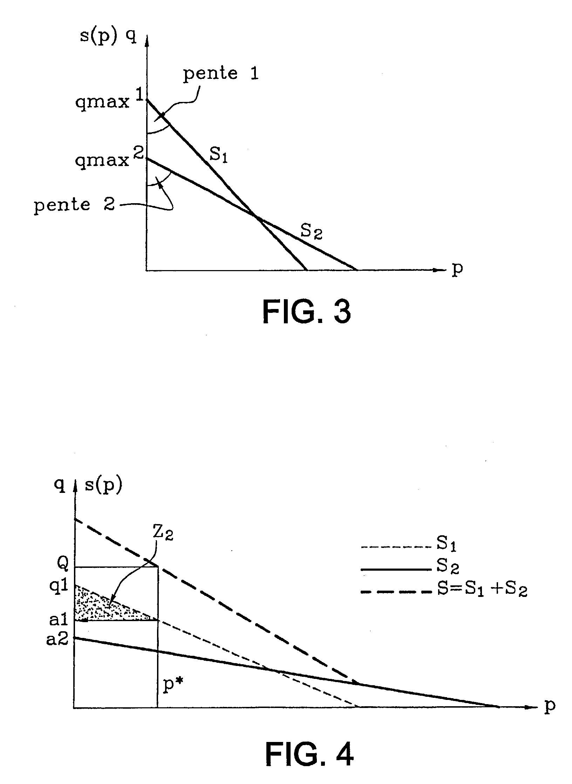

La figure 3 illustre l'étape d'allocation que l'on vient de décrire dans le cas de deux acheteurs dont les fonctions de demande sont affines (fonction d'évaluation polynomiale d'ordre 2).

La seconde étape du procédé consiste à calculer la charge à payer pour chacun des acheteurs. Cette étape met en oeuvre le principe d'exclusion-compensation. Selon ce principe, l'acheteur 1 doit payer le prix que l'acheteur 2 a annoncé être prêt à payer pour obtenir la quantité qu'il aurait eue sans la présence de l'acheteur 1.

Dans cet exemple simple, l'acheteur 1 annonce être prêt à payer l'inverse de $s_1$.

En effet $s_1(p)$ représente la quantité demandée par l'acheteur 1 si le prix de vente est de p. Si l'acheteur 2 était absent de la vente, l'acheteur 1 aurait reçu sa quantité maximale demandée que l'on va désigner par $q_1$. Pour passer de son allocation $a_1$ à sa quantité maximale $q_1$, l'acheteur 1 annonce donc être prêt à payer l'intégrale de l'inverse de $S_1$. On effectue un calcul d'intégrale car on passe d'un prix marginal à un prix total.

La figure 4 illustre ces opérations, la surface de la zone hachurée référencée $Z_2$ correspondant au résultat.

Du fait de l'application du principe d'exclusion-compensation pour calculer cette facturation, les acheteurs ont une incitation à miser leur véritable fonction de demande car cela maximise leur fonction de gain g telle que définie précédemment (c'est à dire l'évaluation $U_i$ pour une quantité de ressource diminuée de la charge $C_i$ à payer pour obtenir cette quantité).

Ce mécanisme est dénommé ci-après MSP (Market Second Price) car il est basé sur l'équilibre de marché et sur le principe des enchères au second prix.

L'avantage de ce mécanisme MSP est qu'il possède les « *bonnes* » propriétés remarquables nécessaires à tout mécanisme d'enchère sans avoir les inconvénients précédemment cités :

- il est réalisable au sens où un acheteur n'est jamais facturé plus que ce qu'il a annoncé être prêt à payer.
- il existe individuellement un effet « *discount* » : plus un acheteur obtient une quantité importante plus son prix unitaire effectivement payé est faible.
- Chaque joueur est incité à miser sa véritable fonction de demande.

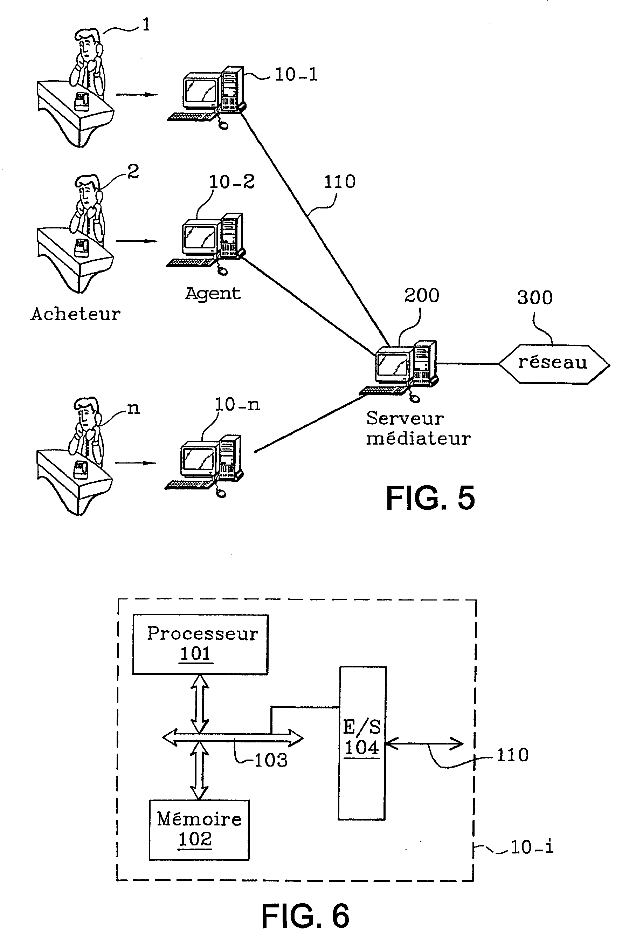

La figure 5 schématise un système de mise en oeuvre du procédé.

Une réalisation pratique de mise en oeuvre opérationnelle du mécanisme d'enchère qui vient d'être décrit peut s'effectuer au travers d'un ensemble d'automates ou d'agents logiciels acheteurs 10-i, où i=1,2,...,n. Chaque acheteur i (mais aussi le vendeur) programme sa fonction d'évaluation et par conséquent sa fonction de demande (définie par seulement deux paramètres dans les exemples signalés) dans son automate ou agent logiciel 10-i. En fait ces fonctions peuvent être prédéfinies et le client acheteur n'aura plus alors qu'à choisir l'une d'entre elles. Ces agents vont ensuite dialoguer avec le serveur « *commissaire-priseur* » 200 pour négocier leur allocation de ressource et charge à payer pour cette ressource en fixant la mise à chaque enchère.

La figure 6, illustre un exemple de réalisation d'un automate implanté dans l'agent acheteur 10-i. Cet automate comporte un processeur 101 relié à des moyens de mémorisation symbolisés par le bloc 102. Ces moyens de mémorisation regroupent au moins une mémoire vive de travail, une mémoire de programme de type ROM ou EEPROM contenant le programme de fourniture des fonctions d'évaluation et de demande de l'acheteur et de dialogue avec le serveur médiateur. Le processeur 101 et les mémoires 102 sont reliée par un bus 103 lui-même relié à un port d'entrée-sortie vers un lien de communication 110 avec le serveur 200.

Lorsque la mise en oeuvre est réalisée par des agents logiciels, ceux-ci peuvent être mobiles.

Ces agents logiciels 10-i peuvent être localisés proches de l'acheteur i, c'est-à-dire dans le terminal de commande de l'acheteur, lorsque ce dernier veut avoir une interaction permanente sur sa fonction de demande.

Dans le cas où la fonction de demande d'un acheteur reste stable, l'agent logiciel de négociation de l'acheteur peut alors se localiser proche du commissaire-priseur 200 c'est-à-dire dans le serveur de médiation.

Sur le schéma de la figure 5, la ressource Q partagée correspond à la bande passante de la liaison matérialisée entre le serveur de médiation et le « *réseau* ». L'avantage d'une « *délocalisation* » de l'agent de négociation de l'acheteur réside dans la diminution du flux d'information de commande circulant entre le serveur de médiation (commissaire-priseur) et les agents acheteurs pour éviter une congestion supplémentaire du réseau. Un autre avantage est l'accélération du dialogue entre l'automate de négociation du client acheteur et le serveur de médiation. Quand un agent acheteur est localisé proche du serveur « *commissaire-priseur* » il ne génère aucun message de commande sur le réseau.

Le « *serveur médiateur* », à savoir le commissaire-priseur prend en compte toutes les mises des acheteurs utilisateurs et procède au calcul du résultat de l'enchère suivant le mécanisme décrit.

Dans le cas du partage de bande passante d'un lien, le commissaire-priseur peut être un serveur logiciel localisé dans le routeur de concentration ou de tout autre équipement de concentration.

A l'issue de sa prise de décision, le commissaire-priseur commande alors l'équipement (dans l'exemple précité, le routeur de concentration) pour que celui-ci alloue la quantité dédiée à chacun des clients. Les charges à payer sont également enregistrées pour être fournies au serveur chargé de signalisation de la ressource allouée et de la facturation. Cela se traduit par une incrémentation du compte client de la somme à payer ou par une décrémentation du nombre de « *jetons* » crédités au compte du client. Pour cela, le serveur médiateur (commissaire-priseur) communique les informations nécessaires au serveur chargé de la signalisation de facturation. Le serveur émet alors, à destination de chaque utilisateur servi, un message indiquant notamment la charge à payer pour la ressource allouée.

Pour d'autres ressources, cela peut être un serveur dédié. Il est à noter que le serveur et les automates sont connectés par des liens du réseau et donc utilisent de la ressource réseau (bande passante).

Du fait que le procédé de l'invention détermine un équilibre des allocations et des prix en un seul coup, cela limite l'utilisation de la ressource, contrairement aux enchères PSP qui sont itératives.

Le procédé de l'invention est tout à fait adapté à un fonctionnement dynamique. Des acheteurs peuvent se connecter pour participer à l'enchère à tout moment. Le mécanisme permet alors de recalculer l'allocation et la charge à payer de chacun.

A la différence des enchères PSP, l'équilibre est automatiquement atteint car les automates acheteurs ne misent pas au coup par coup mais directement les fonctions de demande qui correspondent à leur évaluation de la ressource. Un acheteur qui détient de la ressource peut cependant se voir évincé par l'arrivée d'un nouveau client acheteur concurrent.

Comme les utilisateurs peuvent « *entrer* » et « *sortir* » à tout moment, il est prévu que les transactions s'effectuent par unités monétaires temporelles, les prix d'enchère et charges à payer étant calculées par unités de temps. Par exemple les acheteurs paient x euros par Mégabits par seconde obtenus. S'il n'en est pas ainsi, un acheteur qui ne conserve une quantité de ressource que pour quelques secondes (i.e. d'autres utilisateurs sont arrivés et lui ont « *confisqué* » sa ressource pour partie ou complètement par surenchère) paierait le même prix que s'il avait conservé cette même quantité pendant plusieurs jours.

L'unité de tarification temporelle minimale peut être l'incrément de temps entre deux renégociations de l'enchère, temps minimal de détention de la ressource.

Le mécanisme peut être prévu pour qu'il ne soit pas forcément nécessaire d'obliger les acheteurs « *satisfaits* » à remiser à chaque renégociation, le commissaire-priseur pouvant en effet par défaut supposer constante leur fonction de demande.

Pour détecter le départ d'un client, on peut par exemple à cette fin prévoir le renvoi de toutes les fonctions de demande par les automates de négociation des acheteurs à chaque étape. Ce moyen simple permet en effet de détecter un départ.

Comme on a pu le voir, en ne misant qu'une fois lors d'une négociation, on atteint un équilibre où les acheteurs misent leur véritable fonction de demande et donc leur véritable fonction d'évaluation. Le fait que l'équilibre recherché par tout mécanisme d'enchères soit atteint en une seule itération présente un avantage considérable par rapport à l'état de la technique, notamment les travaux publiés de Nemo Semret.

A cet avantage se rajoute l'avantage par rapport aux mécanismes proposés, que le mécanisme impose moins d'hypothèses techniques sur les caractéristiques des acheteurs. La seule hypothèse faite est que les fonctions de demande doivent être strictement décroissantes tant qu'elles sont strictement positives. On n'imagine pas en effet qu'un client soit prêt à payer plus cher la ressource (au sens du prix unitaire) lorsque la quantité qu'il demande augmente. Cela irait à l'opposé des effets « *discount* » que l'on rencontre habituellement. Enfin, contrairement au procédé itératif des enchères PSP, les utilisateurs ne sont pas informés à chaque itération des mises effectuées par leurs concurrents. Il a été démontré en effet que cette information permettait des collusions de clients pour payer moins et d'autres désagréments comme la possibilité pour le vendeur de maximiser son revenu à partir des mises annoncées par l'ensemble des utilisateurs. Ces phénomènes peuvent finalement inciter les acheteurs à « *mentir* » pour être avantagés (ne pas annoncer leur véritable fonction d'évaluation, voire à tricher ce qui remet complètement en cause l'intérêt et la pertinence du système d'enchères entraînant une perte de confiance de la part des clients acheteurs).

Il n'en est rien avec le procédé qui vient d'être décrit car le mécanisme ne révèle en rien ce qui a été misé par un acheteur à ses concurrents. Seul le commissaire-priseur connaît les fonctions de demande des différents utilisateurs et il est bien entendu possible de mettre en oeuvre une sécurisation du processus de négociation pour garantir cette confidentialité. Néanmoins, le mécanisme d'enchère reste transparent. En retournant à chaque utilisateur la valeur du prix « *fictif* » d'équilibre p* qu'il a calculé, le commissaire-priseur peut « expliquer » l'allocation et le calcul de la charge qu'il a effectué. La charge à payer unitaire (c'est-à-dire $C_i/a_i$) pour un utilisateur est en effet inférieure par construction à ce prix marginal fictif p*.

Dans le mode de réalisation ci-avant, la grandeur p représentait un prix d'enchère et la tarification de la ressource allouée, qui était signalée à l'utilisateur, visait une charge à payer. Dans la variante décrite ci-après, on se borne à allouer une ressource (sans tarification consécutive) en fonction d'un autre type de grandeur p, telle que la durée de téléchargement de données via un réseau étendu.

De façon générale, lorsqu'un utilisateur télécharge un « *gros fichier* » (c'est-à-dire un grand nombre de données) via un réseau étendu, notamment de type IP, tel que le réseau Internet, il peut constater que la vitesse de transfert des données augmente au fur et à mesure du téléchargement. Ainsi, la durée nécessaire pour télécharger N octets augmente en fonction de N, de façon concave, et peut suivre, en première approximation, l'une ou l'autre des variations exponentielle et polynomiale d'ordre 2 de la fonction d'évaluation $U_i$ décrites ci-avant en référence à la figure 2D. En particulier, la dérivée d'une telle fonction « *d'évaluation* » correspond à la durée qu'un utilisateur est prêt à attendre pour télécharger le Nième octet. Il s'agit donc bien d'une fonction d'évaluation marginale, continue, positive et strictement décroissante tant qu'elle est strictement positive, donnant une durée unitaire à attendre pour télécharger le Nième octet suivant N-1 octets précédents. L'inverse de cette fonction d'évaluation marginale correspond alors à une fonction de demande $S_i$ d'un utilisateur i.

En effet, on distingue un utilisateur 1 qui doit télécharger un « *petit fichier* » d'un utilisateur 2 qui doit télécharger un « *gros fichier* » comme suit.

On considère d'abord la fonction d'évaluation marginale de ces utilisateurs, qui donne la durée unitaire d (en tant que « *grandeur p* » selon la terminologie utilisée ci-avant) en fonction du nombre d'octets demandés q, dont les variations correspondent à celles représentées sur la figure 2B.

L'utilisateur 1 qui doit télécharger un « *petit fichier* » a intérêt à ce que la durée de téléchargement des premiers octets soit faible, quitte à ce que la durée de téléchargement des octets suivants soit plus grande que celle prévue pour les autres utilisateurs. Ainsi, la pente Y1 de la fonction d'évaluation marginale de l'utilisateur 1 sera douce. En revanche, la pente 1/Y1 de la fonction de demande $s_1$ de l'utilisateur 1 sera relativement abrupte et peut correspondre à la « *pente 1* » telle que représentée sur la figure 3.

A l'inverse, l'utilisateur 2 qui doit télécharger un « *gros fichier* » peut faire une concession sur la durée de téléchargement des premiers octets mais souhaiter une durée de téléchargement des octets suivants plus faible que celle prévue pour les autres utilisateurs. Ainsi, la pente Y2 de la fonction d'évaluation marginale de l'utilisateur 2 sera abrupte. Inversement, la pente 1/Y2 de la fonction de demande $s_2$ de l'utilisateur 2 sera relativement douce et peut correspondre à la "*pente 2*" telle que représentée sur la figure 3.

On indique avant que ces fichiers peuvent être aussi bien des applications (auquel cas il s'agit de « *gros* » fichiers) que des pages html, par exemple avec un contenu textuel (auquel cas il s'agit plutôt de « *petits* » fichiers).

L'allocation de ressource selon cette variante de réalisation se déroule préférentiellement comme suit.

Le serveur reçoit les requêtes de téléchargement et les traite entre deux instants t0 et t1, directement ou, plus avantageusement, par l'intermédiaire d'une unité de traitement dédiée et connectée au serveur. Plus particulièrement, cette unité de traitement met en forme elle-même les fonctions de demande $s_i$ des utilisateurs i, préférentiellement à partir du nombre d'octets demandés (taille mémoire des fichiers à télécharger), en attribuant en particulier des pentes de fonction de demande selon le principe décrit ci-avant. Par exemple, l'unité de traitement peut classer les requêtes par taille mémoire de fichier et attribuer :

- une pente 1 à une fonction de demande pour le téléchargement d'un fichier dont la taille est comprise entre 0 et X octets,
- une pente 2 (plus douce que la pente 1) à une fonction de demande pour le téléchargement d'un fichier dont la taille est comprise entre X et 2X octets,
- une pente 3 (plus douce que la pente 2) à une fonction de demande pour le téléchargement d'un fichier dont la taille est comprise entre 2X et 3X octets, etc.

Avantageusement (mais non nécessairement), on peut ajuster aussi les « *qmax* » (quantité maximale décrite ci-avant en référence aux figures 2C et 3). Par exemple, pour faire en sorte que des utilisateurs souhaitant télécharger de petits fichiers puissent être servis dès le premier tour d'enchère, on attribue :

- un qmax 1 à une fonction de demande pour le téléchargement d'un fichier dont la taille est comprise entre 0 et X octets,
- un qmax 2, qui est plus petit que qmax 1, à une fonction de demande pour le téléchargement d'un fichier dont la taille est comprise entre X et 2X octets, etc.,

de sorte que les fonctions de demande se croisent entre elles.

On estime ensuite une « *durée d'équilibre* » $d^*$, en tant que grandeur d'équilibre, comme décrit ci-avant et, de là, la quantité de ressource $a_i$ à attribuer à chaque utilisateur telle que $a_i = s_i(d^*)$.

On indique que le procédé selon cette variante peut se poursuivre avantageusement en déterminant les durées d'attente effectives de téléchargement $C_i$ qui sont à prévoir pour chaque utilisateur, selon le principe d'exclusion-compensation décrit ci-avant, à l'aide d'une formule du type :

$$C_i = \sum_{j \neq i} \int_{a_j^s}^{a_j^0} s_j^{-1}(p) dp$$

Le procédé d'allocation peut se poursuivre en outre, entre des instants suivants t1 et t2, par un second tour d'enchère intéressant les utilisateurs non servis au premier tour et de nouveaux utilisateurs en tant que « *nouveaux arrivants* ». A ce titre, l'adjonction d'une pile de type FIFO est avantageuse pour faire en sorte que les utilisateurs arrivés en premier soient concernés par les premiers tours d'enchère.

On comprendra ainsi que cette variante de l'invention consiste à allouer une ressource entre plusieurs utilisateurs, de façon équitable car elle tient compte de la durée d'attente de chaque utilisateur pour obtenir cette ressource.

Dans une autre variante qui consiste sensiblement en une généralisation de la variante ci-avant, la grandeur p peut consister en une date à laquelle un utilisateur peut se voir allouer une quantité de ressource q, cette date étant d'autant plus avancée dans le temps que la quantité de ressource est importante. Dans cette variante générale, on impose au système d'allocation une variation concave de la date d'allocation effective t en fonction la quantité q allouée (par exemple une variation du type : $t = t_0 \sqrt{q}$). Typiquement, chaque utilisateur pourra formuler ses desiderata comme suit : « *je souhaite une quantité de ressource $q_i$ et je suis prêt à attendre jusqu'à la date $t_i$ pour obtenir cette ressource* ».

On définit ainsi une fonction d'évaluation et, de là, une fonction de demande propre à chaque utilisateur.

On indique toutefois que dans la variante ci-avant où la grandeur p consistait en une durée de téléchargement, les desiderata de l'utilisateur n'étaient pas formulés directement en terme de concession par rapport à la durée de téléchargement, mais indirectement par rapport à la taille du fichier qu'il demandait à télécharger.

Dans une autre variante encore, la concession de l'utilisateur peut se faire par rapport à la qualité de la ressource attribuée, par exemple en terme de rapport signal sur bruit d'une communication, ou encore par rapport à un nombre d'images par seconde dans le contexte d'une diffusion audiovisuelle. Dans ce dernier cas appliqué par exemple à la diffusion de contenus audiovisuels via le réseau Internet, les terminaux des utilisateurs peuvent avoir des capacités différentes (vitesse de processeur, taille mémoire de la carte graphique ou de la carte son, etc.). Ainsi, les utilisateurs ont des fonctions de demande différentes, notamment selon les capacités de leur terminal ou aussi simplement selon leur souhait d'être servis rapidement.

En particulier, cette variante s'applique à tout système d'allocation dans lequel un paramètre inversement proportionnel à la qualité du service (représentant donc une concession d'un utilisateur par rapport à ce critère) suit une variation concave en fonction de la quantité de ressource sollicitée, ce qui impose ainsi une variation concave des fonctions d'évaluation.

Ainsi, les desiderata d'un utilisateur, définissant sa fonction de demande, peuvent se formuler comme suit :
« *je souhaite visualiser un contenu audiovisuel dont la durée est de X minutes (correspondant à q mégaoctets avec une qualité optimale de N images par seconder mais avec une qualité de $n_i$ images par seconde (inférieure à N)* ».

De façon générale, on comprendra ainsi que la grandeur p représente une concession qu'un utilisateur est prêt à accorder pour obtenir une quantité q de la ressource. On a vu, à travers les différentes variantes ci-avant, qu'il pouvait aussi bien s'agir d'une concession impliquant un prix à payer, qu'une concession sur la qualité ou la durée du service alloué. Dès lors que cette grandeur p peut être de nature différente d'un prix à payer, la présente invention n'est pas une méthode dans les activités économiques en tant que telle, même si elle tire quelques enseignements avantageux de la technique des enchères.

De façon plus générale, l'allocation de ressource décrite ci-avant s'applique, comme on l'a indiqué précédemment, à un réseau « *simple* » constitué d'un unique arc entre deux noeuds : un noeud d'entrée et un noeud de sortie. La mise en oeuvre d'un tel procédé permet ainsi d'optimiser l'allocation de ressource disponible sur cet arc, entre plusieurs utilisateurs. Dans une réalisation où le réseau est agencé en une pluralité d'arcs, reliés chacun à deux noeuds, de façon arborescente et préférentiellement sans maille, il faut considérer tous les arcs du réseau, susceptibles d'être sollicités par les utilisateurs.

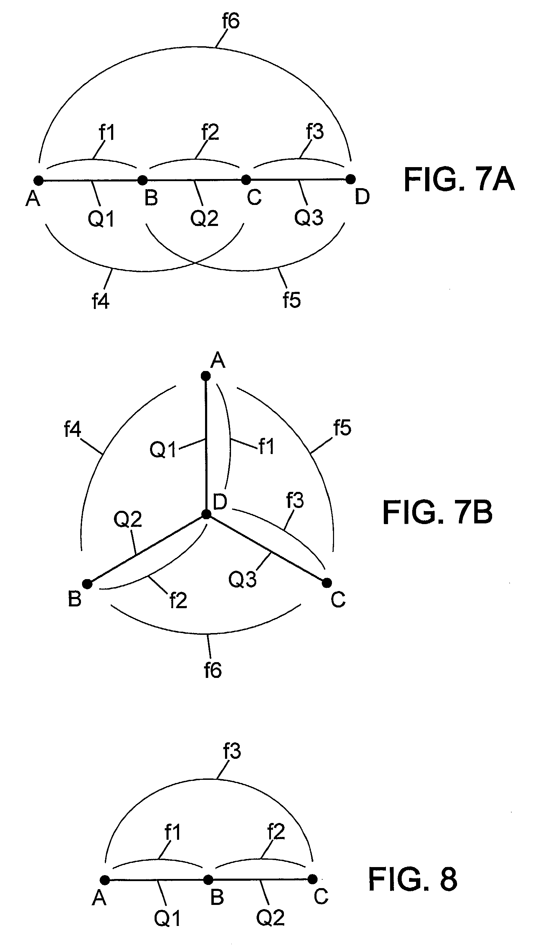

Ainsi, plusieurs utilisateurs peuvent souhaiter utiliser ensemble et en même temps un ou plusieurs mêmes arcs du réseau, même si les chemins du réseau empruntés sont différents d'un utilisateur à l'autre. On dit que chaque arc AB, BC (figure 8) du réseau constitue un « *marché* » pour lequel on cherche à estimer une grandeur d'équilibre $p^*_1$, $p^*_2$ pour une quantité de ressource totale $Q_1$, $Q_2$ disponible sur cet arc AB, BC (respectivement). Ainsi, un utilisateur qui demande une ressource pour « *transiter* » via l'arc AB, vient perturber la demande d'un utilisateur qui n'est intéressé, quant à lui, que par la ressource de cet arc AB (ou par une partie seulement de la ressource totale $Q_1$ de cet arc).

En se référant à la figure 8, en considérant deux arcs contigus AB et BC, on peut distinguer trois catégories d'utilisateurs :

- une première catégorie qui n'est intéressée que par la ressource de l'arc AB,
- une seconde catégorie qui n'est intéressée que par la ressource de l'arc BC,
- une troisième catégorie qui est intéressée à la fois par la ressource de l'arc AB et par la ressource de l'arc BC. Finalement, cette catégorie concerne des utilisateurs qui souhaitent transiter du noeud d'entrée A de l'arc AB vers le noeud de sortie C de l'arc BC.

Pour simplifier dans un premier temps les mécanismes mis en jeu, on considère seulement trois utilisateurs appartenant respectivement aux trois catégories précitées. La fonction de demande f1 du premier utilisateur qui n'est intéressé que par la ressource de l'arc AB ne dépend que de la grandeur $p_1$ associée à l'arc AB. De même, la fonction de demande f2 du second utilisateur qui n'est intéressé que par la ressource de l'arc BC ne dépend que de la grandeur $p_2$ associée à l'arc BC. En revanche, la fonction de demande f3 du troisième utilisateur qui est intéressé à la fois par l'arc AB et l'arc BC dépend à la fois de la grandeur $p_1$ et de la grandeur $p_2$.

En particulier, on cherche dans un premier temps à calculer la grandeur d'équilibre $p^*_1$ et $p^*_2$ de chaque arc AB et BC en fonction de la ressource totale $Q_1$ et $Q_2$ disponible sur cet arc. L'interaction entre la demande du troisième utilisateur et celles des deux premiers utilisateurs se met en équations selon le système suivant :

$$\begin{cases} f1(p_1) + f3(p_1 + p_2) = Q_1 & \textit{pour l'arc AB} \\ f2(p_2) + f3(p_1 + p_2) = Q_2 & \textit{pour l'arc BC} \end{cases}$$

Il s'agit d'un système de deux équations à deux inconnues pi et $P_2$ qui admet deux solutions uniques, non triviales, $p^*_1$ et $p^*_2$, à condition que les fonctions de demande fi soient bien strictement décroissantes tant qu'elles sont positives.

Il convient de préciser un point qui ressort de la classification ci-avant des utilisateurs dans différentes catégories. On comprendra que chaque utilisateur du réseau a une unique fonction de demande pour le ou les arcs du réseau qu'il emprunte, quelque soit le nombre d'arcs empruntés.

Ainsi, en généralisant le système d'équations à un ensemble E d'arcs formant tout le réseau considéré et à un ensemble total I d'utilisateurs i, le système devient, pour tout arc e du réseau :

$$\left\{ \begin{array}{c} \forall e \in E, \\ \sum_{i \in I / e \in E_i} s_i \left( \sum_{k \in E_i} p_k \right) = Q_e \end{array} \right. \qquad (\text{SEQN})$$

où :

- I est donc l'ensemble des utilisateurs,
- $s_i$ est la fonction de demande de l'utilisateur i,
- $E_i$ est l'ensemble des arcs, dont l'arc e, traversés par le chemin qu'emprunte l'utilisateur i (et dépend donc de cet utilisateur i),
- $p_k$ sont les N inconnues du système à résoudre pour obtenir les N grandeurs d'équilibre $p^*_e$, chacune associées à un arc e, N étant le cardinal de l'ensemble E,
- $Q_e$ est la quantité de ressource totale disponible sur l'arc e, et
- E est l'ensemble des arcs du réseau, comme indiqué ci-avant.

Chaque équation du système ci-avant revient donc à sommer toutes les fonctions de demande des utilisateurs i dont le chemin $E_i$ passe par l'arc e et qui, ainsi, demandent une quantité de la ressource de l'arc e.

De nombreux tests ont montré systématiquement que ces N équations admettaient N solutions uniques, non triviales, correspondant à des grandeurs d'équilibres $p^*_e$ pour chaque arc e, respectant la réalité des « *marchés* ».

Dans une étape ultérieure, similaire à celle décrite ci-avant pour un réseau constitué d'un arc unique, on calcule une quantité $a_i$ à allouer à chaque utilisateur i, pour le ou les arcs qu'il sollicite, selon la relation :

$$\forall i \in I, \quad a_i = s_i \left( \sum_{k \in E_i} p^*_k \right)$$

On comprendra en particulier que la quantité $a_i$ allouée à un utilisateur est la même, d'un arc à l'autre, ce qui permet avantageusement de surmonter les congestions du réseau. En effet, si l'un des arcs ne pouvait fournir qu'une quantité moindre que celles que fournissent les autres arcs, la quantité que pourrait réellement utiliser l'utilisateur i correspondrait à cette quantité moindre. Pour illustrer ce propos, on prend l'exemple d'un réseau sur lequel un utilisateur peut disposer :

- d'un débit de 20 koctets/s sur un premier arc qu'il emprunte,
- d'un débit de 5 koctets/s sur un second arc qu'il emprunte, et
- d'un débit de 20 koctets/s sur un troisième arc qu'il emprunte.

Finalement, le débit dont bénéficiera réellement l'utilisateur est le plus faible des trois, c'est-à-dire 5 koctets/s.

Dans ce mode de réalisation de l'invention, puisque l'on estime une même quantité de ressource à attribuer à un utilisateur sur l'ensemble des arcs du réseau, le problème ci-avant n'est pas rencontré et, ainsi, la répartition des ressources est réellement optimale.

On indique en outre que l'expression mathématique « $k \in E_i$ », dans la formulation du système d'équations (SEQN) ci-avant, ne signifie pas forcément k = 1,2,...,m où m est le cardinal de l'ensemble $E_i$. En effet, l'indexation des arcs du réseau est définie une fois pour toutes avant de considérer les chemins empruntés. Ainsi, un utilisateur peut emprunter un arc portant l'indice 3, puis un arc 7, un arc 12 ...

En principe, les arcs successifs 3, 7, 12 sont contigus, c'est-à-dire qu'ils partagent deux à deux un noeud commun sans former de maille. Toutefois, la formulation du système (SEQN) n'exclut pas le cas où des utilisateurs souhaiteraient emprunter un chemin d'arcs non contigus, c'est-à-dire simplement des tronçons de chemins dans le réseau. Cette situation peut se rencontrer lorsque l'utilisateur emprunte plusieurs réseaux interconnectés, le cas échéant appartenant à deux opérateurs différents. En effet, dans ce cas, on appliquera la même fonction de demande de l'utilisateur pour tous les chemins du réseau qu'il emprunte.

Pour clarifier ces propos, on donne ci-après l'exemple de deux réseaux constitués chacun de trois arcs, le premier représenté sur la figure 7A comportant trois arcs contigus et le second représenté sur la figure 7B comportant trois arcs en étoile.

Pour simplifier les systèmes d'équations, on considère systématiquement que les utilisateurs sont rangés par catégories d'intérêt (comme les trois catégories dans l'exemple d'un réseau à deux arcs ci-avant) et que leurs fonctions de demande sont sommées par catégories.

Le système d'équations régissant la répartition des fonctions de demande en fonction de la ressource disponible sur chaque arc s'exprime alors par :

$$\begin{cases} Q1 = f1(p1) + f4(p1+p2) + f6(p1+p2+p3) \\ Q2 = f2(p2) + f4(p1+p2) + f5(p2+p3) + f6(p1+p2+p3) \\ Q3 = f3(p3) + f5(p2+p3) + f6(p1+p2+p3) \end{cases}$$

pour le réseau à arcs contigus de la figure 7A, et par :

$$\begin{cases} Q1 = f1(p1) + f4(p1+p2) + f5(p1+p3) \\ Q2 = f2(p2) + f4(p1+p2) + f6(p2+p3) \\ Q3 = f3(p3) + f5(p1+p3) + f6(p2+p3) \end{cases}$$

pour le réseau en étoile de la figure 7B.

Pour le premier système d'équations régissant le réseau à arcs contigus de la figure 7A, on note :

- Q1, la ressource disponible sur l'arc AB,
- Q2, la ressource disponible sur l'arc BC,
- Q3, la ressource disponible sur l'arc CD,
- f1, la somme des fonctions de demande des utilisateurs qui ne sont intéressés que par la ressource de l'arc AB

$$\left( f1(p1) = \sum_{E_i = \{AB\}} f_i(p1) \right),$$

- f2, la somme des fonctions de demande des utilisateurs qui ne sont intéressés que par la ressource de l'arc BC

$$\left( f2(p2) = \sum_{E_j = \{BC\}} f_j(p2) \right),$$

- f3, la somme des fonctions de demande des utilisateurs qui ne sont intéressés que par la ressource de l'arc CD,
- f4, la somme des fonctions de demande des utilisateurs qui ne sont intéressés que par les ressources des arcs AB et BC

$$\left( f4(p1+p2) = \sum_{E_k = \{AB,BC\}} f_k(p1+p2) \right),$$

- f5, la somme des fonctions de demande des utilisateurs qui ne sont intéressés que par les ressources des arcs BC et CD, et
- f6, la somme des fonctions de demande des utilisateurs qui sont intéressés par les ressources de tous les arcs AB, BC et CD

$$( f6(p1 + p2 + p3) = \sum_{E_l=\{AB,BC,CD\}} f_l(p1 + p2 + p3) )\ .$$

On notera que dans la situation ci-avant du réseau à arcs contigus de la figure 7A, on ne prévoit pas explicitement le cas d'un utilisateur qui ne serait intéressé que par la ressource de l'arc AB et par la ressource de l'arc CD, c'est-à-dire par les ressources de deux arcs non contigus. Cette situation peut se rencontrer dans le cas où cet utilisateur solliciterait de la ressource sur deux réseaux distincts mais interconnectés (par exemple appartenant à deux opérateurs différents). Toutefois, on indique qu'un tel cas est résolu préférentiellement en appliquant sa fonction de demande f7 respectivement aux deux grandeurs p1 (associée à l'arc AB) et p3 (associée à l'arc CD), et en ajoutant ensuite la contribution de la demande de ce type d'utilisateur aux sommes des fonctions de demande f1 et f3, respectivement (f1 devient ainsi f1+f7(p1) et f3 devient ainsi f3+f7(p3)). Par extension à un réseau à N arcs, on procédera ainsi pour tout utilisateur sollicitant plusieurs chemins non contigus.

Bien entendu, on entend par arcs « *contigus* », des arcs AB, BC du réseau comportant un seul noeud B en commun, le réseau étant arborescent et sans maille.

Pour le second système d'équations régissant le réseau en étoile de la figure 7B, on note :

- Q1, la ressource disponible sur l'arc AD,
- Q2, la ressource disponible sur l'arc DB,
- Q3, la ressource disponible sur l'arc DC,
- f1, la somme des fonctions de demande des utilisateurs qui ne sont intéressés que par la ressource de l'arc AD,
- f2, la somme des fonctions de demande des utilisateurs qui ne sont intéressés que par la ressource de l'arc DB,
- f3, la somme des fonctions de demande des utilisateurs qui ne sont intéressés que par la ressource de l'arc DC,
- f4, la somme des fonctions de demande des utilisateurs qui sont intéressés à la fois par les ressources des arcs AD et DB,
- f5, la somme des fonctions de demande des utilisateurs qui sont intéressés à la fois par les ressources des arcs AD et DC, et
- f6, la somme des fonctions de demande des utilisateurs qui sont intéressés à la fois par les ressources des arcs BD et DC.

On comprendra ainsi que la généralisation d'un réseau à N arcs au sens du système d'équations (SEQN) ci-avant peut découler d'une combinaison de groupes de trois arcs :

- contigus selon la figure 7A,
- et en étoile selon la figure 7B.

## Revendications

**1.** Procédé pour allouer une ressource entre n utilisateurs, au moyen d'une commande par enchères, **caractérisé en ce qu'**il comprend une étape de détermination de la quantité de ressource allouée à chaque utilisateur en un seul tour d'enchère, cette étape comprenant :

- le calcul d'une grandeur d'équilibre p* à partir de la somme S de n fonctions de demande $s_i(p)$ respectives des n utilisateurs, définies en fonction d'une grandeur p représentant une concession qu'est prêt à accorder un utilisateur pour obtenir une quantité q de ressource, ces fonctions de demande étant positives décroissantes et continues,

au moyen de la relation S(p*)= Q,

- dans laquelle Q est la quantité totale disponible,

- et S(p) est la demande totale correspondant à la somme des demandes $s_i(p)$ de chaque utilisateur i pour chaque valeur de la grandeur p, et s'exprime par : $S(p) = s_1(p) + s_2(p) + ... + s_i(p) + ... + s_n(p)$,

- et le calcul de la quantité $a_i$ à allouer pour cette grandeur d'équilibre p* à chaque utilisateur i à partir de sa fonction de demande $s_i$ telle que :

$$a_i = s_i(p^*)$$

**2.** Procédé d'allocation d'une ressource selon la revendication 1, **caractérisé en ce qu'**il consiste, préalablement à toute enchère :

- à choisir une fonction d'évaluation $U_i$ pour l'acquisition d'une quantité q de ressource telle que :

  * $U_i = 0$ si q=0, et
  * $U'_i$ dérivée de $U_i$ par rapport à q est positive, strictement décroissante tant qu'elle est strictement positive et continue, en fonction de q,

- à obtenir de chaque utilisateur i participant à l'enchère des desiderata exprimant son intérêt pour une quantité q de la ressource globale Q en contrepartie d'une concession p, cet intérêt étant exprimé par la fonction d'évaluation $U_i$ ou par la fonction d'évaluation marginale $U'_i$ accordée pour l'acquisition d'une unité supplémentaire de la ressource q, $U'_i$ étant ainsi la dérivée par rapport à q de $U_i$,
- à estimer la fonction de demande $s_i(p)$ comme étant la fonction inverse de la fonction d'évaluation marginale $U'_i$,
- et à programmer, pour un tour d'enchère, chaque fonction de demande $s_i(p)$ caractérisant un utilisateur i participant à ce tour d'enchère.

**3.** Procédé d'allocation d'une ressource selon la revendication 1 ou 2, **caractérisé en ce que** l'estimation de la fonction de demande consiste à déterminer au moins deux paramètres ($q_{max}/\alpha$) caractérisant cette fonction de demande.

**4.** Procédé d'allocation d'une ressource selon la revendication 3, **caractérisé en ce que** la fonction d'évaluation est une fonction polynomiale de la forme :

$$U(q) = \frac{\min(q, q_{max}) * (q_{max} - 0,5 * \min(q, q_{max}))}{\alpha}$$

et **en ce que** la fonction de demande s(p) correspondante s'exprime à partir de deux paramètres $\alpha$ et $q_{max}$ tels que $s(p) = \max(0 ; q_{max} - \alpha p)$,
où p est une concession marginale que l'utilisateur est prêt à accorder pour une unité de ressource supplémentaire au delà de q = s(p).

**5.** Procédé d'allocation d'une ressource selon la revendication 3, **caractérisé en ce que** la fonction d'évaluation est une fonction de la forme :

$$U(q) = \frac{\min(q, q_{max}) * (Ln(q_{max}) - Ln(\min(q, q_{max})) + 1)}{\alpha}$$

où $Ln$ est le logarithme népérien,
et **en ce que** la fonction de demande s(p) correspondante s'exprime à partir de deux paramètres $\alpha$ et $q_{max}$ tels que $s(p) = q_{max} * \exp(\alpha * p)$, où p est une concession marginale que l'utilisateur est prêt à accorder pour une unité de ressource supplémentaire au delà de q = s(p).

**6.** Procédé d'allocation d'une ressource selon l'une des revendications précédentes, **caractérisé en ce qu'**il comporte une étape supplémentaire de signalisation destinée à l'utilisateur et lui indiquant la quantité de ressource $a_i$ qui peut lui être effectivement attribuée et la concession $C_i$ à prévoir pour obtenir cette quantité de ressource.

**7.** Procédé d'allocation d'une ressource selon la revendication 6, **caractérisé en ce que** l'étape de signalisation comprend un calcul de la concession totale $C_i$ pour l'obtention de la quantité $a_i$ proposée à un utilisateur i, à partir de sa fonction de demande $s_i$, ce calcul se faisant à l'aide de la relation :

$$C_i = \sum_{j \neq i} \int_{a_j^s}^{a_j^0} s_j^{-1}(p)dp$$

et reposant sur le principe d'exclusion/compensation selon lequel, pour l'utilisateur j :

- $a_j^s$ représente son allocation effective en présence de l'utilisateur i, et
- $a_j^0$ (supérieure à $a_j^s$) représente l'allocation dont l'utilisateur j aurait bénéficié en l'absence de l'utilisateur i,

$s_j^{-1}$ étant les inverses des fonctions de demande des utilisateurs j concurrents de l'utilisateur i.

**8.** Procédé d'allocation d'une ressource selon la revendication 7, dans lequel la concession est un prix à payer par l'utilisateur pour obtenir une quantité de ressource, **caractérisé en ce que** l'étape de signalisation comporte une indication de tarification $C_i$ de la quantité de ressource $a_i$ proposée à l'utilisateur i, calculée à l'aide de la relation :

$$C_i = \sum_{j \neq i} \int_{a_j^s}^{a_j^0} s_j^{-1}(p)dp$$

**9.** Procédé d'allocation d'une ressource selon l'une des revendications précédentes, dans lequel la ressource à allouer est disponible sur un réseau arborescent formé d'un ensemble E comportant N arcs, chaque arc e du réseau disposant de sa propre quantité totale de ressource $Q_e$,
**caractérisé en ce que** le procédé comporte les étapes suivantes :

a) pour chaque utilisateur i, identifier l'ensemble $E_i$ des arcs k du réseau dans un chemin que demande à emprunter l'utilisateur i,
b) obtenir sa fonction de demande

$$s_i\left(\sum_{k \in E_i} p_k\right)$$

visant l'ensemble $E_i$ des arcs k qu'il demande à emprunter,
c) répéter les étapes a) et b) pour l'ensemble I des utilisateurs i sollicitant le réseau,
d) classer les fonctions de demande par arc e du réseau, en fonction de la quantité totale de ressource $Q_e$ disponible sur cet arc e, pour mettre en forme un système de N équations à N inconnues $p_k$ du type:

$$\begin{cases} \forall e \in E, \\ \displaystyle\sum_{i \in I/e \in E_i} s_i \left( \sum_{k \in E_i} p_k \right) = Q_e \end{cases}$$

e) résoudre le système d'équations pour obtenir N grandeurs d'équilibre $p^*_e$ associées chacune à un arc e du réseau, et

f) estimer, pour chaque utilisateur i, la quantité $a_i$ de ressource à allouer à cet utilisateur i, déduite de sa fonction de demande $s_i$ appliquée à la somme des grandeurs d'équilibre $p^*_k$ associées chacune à un arc k emprunté par l'utilisateur i, selon la relation :

$$\forall i \in I, \quad a_i = s_i \left( \sum_{k \in E_i} p^*_k \right)$$

**10.** Procédé d'allocation d'une ressource selon la revendication 9, **caractérisé en ce que** ladite quantité de ressource $a_i$ allouée à l'utilisateur i est sensiblement la même sur chaque arc k parmi l'ensemble des arcs $E_i$ qu'emprunte cet utilisateur i.

**11.** Procédé d'allocation d'une ressource selon l'une des revendications 9 et 10, dans lequel le réseau considéré est sans maille, **caractérisé en ce que** le réseau se déduit d'un modèle combinant des groupes d'au moins trois arcs contigus et d'au moins trois arcs en étoile.

**12.** Procédé d'allocation d'une ressource selon l'une des revendications 9 à 11, prises en combinaison avec la revendication 2, **caractérisé en ce que** ledit système de N équations admet N solutions uniques, non triviales.

**13.** Système d'allocation d'une ressource entre n utilisateurs, au moyen d'une commande par enchères, **caractérisé en ce qu'**il comprend des moyens de détermination de la quantité de ressource allouée à chaque utilisateur en un seul tour d'enchère, ces moyens comprenant un moyen de calcul :

* d'une grandeur d'équilibre $p^*$ à partir de la somme S de n fonctions de demande $s_i(p)$ respectives des n utilisateurs, définies en fonction d'une grandeur p représentant une concession qu'est prêt à accorder un utilisateur pour obtenir une quantité q de ressource, ces fonctions de demande étant positives décroissantes et continues,

au moyen de la relation S(p*)= Q,

- dans laquelle Q est la quantité totale disponible,
- et S(p) est la demande totale correspondant à la somme des demandes $s_i(p)$ de chaque utilisateur i pour chaque valeur de la grandeur p, et s'exprime par : $S(p) = s_1(p) + s_2(P) + ... + s_i(P) + ... + s_n(p)$,

* et de la quantité $a_i$ à allouer pour cette grandeur d'équilibre $p^*$ à chaque utilisateur i à partir de sa fonction de demande $s_i$ telle que :

$a_i = s_i(p^*)$

**14.** Système d'allocation d'une ressource selon la revendication 13, **caractérisé en ce qu'**il comporte en outre des moyens de signalisation d'une concession à accorder par l'utilisateur i pour obtenir la quantité de ressource $a_i$

destinée à cet utilisateur i, ces moyens comportant :

- un moyen de calcul d'une concession totale $C_i$, pour la quantité $a_i$ de la ressource que l'utilisateur i peut obtenir, et
- un moyen pour former un message destiné à signaler à l'utilisateur i la quantité de ressource $a_i$ qui peut effectivement lui être attribuée et la concession $C_i$ qu'il devra accorder pour obtenir cette quantité $a_i$.

**15.** Système d'allocation d'une ressource selon la revendication 14, **caractérisé en ce que** le moyen de calcul de la concession totale $C_i$ pour l'obtention de la quantité $a_i$ proposée à un utilisateur i, s'effectue à partir de sa fonction de demande $s_i$, à l'aide de la relation :

$$C_i = \sum_{j \neq i} \int_{a_j^s}^{a_j^0} s_j^{-1}(p)\,dp$$

et reposant sur un principe d'exclusion/compensation selon lequel, pour l'utilisateur j :

- $a_j^s$ représente son allocation effective en présence de l'utilisateur i, et
- $a_j^0$ (supérieure à $a_j^s$) représente l'allocation dont l'utilisateur j aurait bénéficié en l'absence de l'utilisateur i,

$s_j^{-1}$ étant les inverses des fonctions de demande des utilisateurs j concurrents de l'utilisateur i.

**16.** Système d'allocation d'une ressource selon l'une des revendications 13 à 15, dans lequel la ressource à partager est disponible via un réseau, **caractérisé en ce que** les moyens de détermination de la quantité de ressource allouée $a_i$ et, le cas échéant, les moyens de signalisation de la concession $C_i$ pour obtenir la quantité $a_i$ sont réalisés par un ordinateur de type serveur programmé à cet effet et agissant en tant que serveur médiateur connecté au réseau.

**17.** Système d'allocation d'une ressource selon la revendication 16, **caractérisé en ce que** les utilisateurs comportent des moyens pour émettre à destination du serveur au moins des desiderata caractérisant une fonction de demande et une participation à un tour d'enchère avec cette fonction de demande.

**18.** Système d'allocation d'une ressource selon la revendication 17, dans lequel la fonction de demande se **caractérise par** deux paramètres uniquement, **caractérisé en ce que** le serveur est agencé pour affecter un couple de valeurs desdits paramètres à chaque utilisateur participant à une enchère.

**19.** Système d'allocation d'une ressource selon l'une quelconque des revendications 16 à 18, **caractérisé en ce que** les utilisateurs sont équipés d'automates programmés pour dialoguer avec le serveur et pour transmettre les desiderata de l'utilisateur.

**20.** Système d'allocation d'une ressource selon la revendication 19, **caractérisé en ce que** les automates sont constitués par des agents logiciels mobiles pouvant être placés directement auprès du serveur.

**21.** Système d'allocation d'une ressource selon l'une des revendications 13 à 20, dans lequel la ressource à allouer est disponible sur un réseau arborescent formé d'un ensemble E comportant N arcs, chaque arc e du réseau disposant de sa propre quantité totale de ressource $Q_e$, **caractérisé en ce que** le système comporte en outre :

- des moyens d'identification, pour chaque utilisateur i, de l'ensemble $E_i$ des arcs k du réseau dans le chemin que demande à emprunter l'utilisateur i,
- des moyens d'analyse de requêtes pour obtenir la fonction de demande

$$s_i\left(\sum_{k\in E_i} p_k\right)$$

de l'utilisateur i, visant l'ensemble $E_i$ des arcs k qu'il demande à emprunter,

- des moyens de calcul pour :

 * résoudre un système d'équations, pour l'ensemble I des utilisateurs i sollicitant le réseau, régissant l'ensemble des fonctions de demande des utilisateurs en fonction des ressources respectives $Q_e$ disponibles sur chaque arc e :

$$\begin{cases} \forall e \in E, \\ \displaystyle\sum_{i\in I/e\in E_i} s_i\left(\sum_{k\in E_i} p_k\right) = Q_e \end{cases}$$

ledit système comportant N équations à N inconnues $p_k$ et admettant N solutions correspondant à des grandeurs d'équilibre $p^*_e$ associée chacune à un arc e du réseau,

 * et estimer, pour chaque utilisateur i, la ressource $a_i$ à allouer à cet utilisateur i, déduite de sa fonction de demande si appliquée à la somme des grandeurs d'équilibre $p^*_k$ associées chacune à un arc k emprunté par l'utilisateur i, selon la relation :

$$\forall i \in I, \quad a_i = s_i\left(\sum_{k\in E_i} p^*_k\right)$$

Ui

q

## FIG. 1A

U'i

q

## FIG. 1B

3 exemples de fonction d'utilité
pour un même $q_{max}$

p

$U_1$

$U_2$

$U_3$

q

## FIG. 2A

U'    les 3 utilités marginales
correspondantes

p

$U'_1$

$U'_2$

$U'_3$

qmax

q

## FIG. 2B

q

qmax

$S_1$

$S_2$

$S_3$

p

## FIG. 2C

U(exp)=(fonction exponentielle)
$\alpha_{exp}=0,04$
U(lin)=(fonction poly-nominale)
$\alpha_{poly}=0,5$

## FIG. 2D

S(lin)=fonction de demande linéaire: $\alpha_{exp}=0,5$
S(exp)=fonction de demande exponentielle $\alpha=0,04$

## FIG. 2E

FIG. 3

FIG. 4

Acheteur

Agent

Serveur médiateur

réseau

1

2

n

10-1

10-2

10-n

110

200

300

## FIG. 5

Processeur
**101**

Mémoire
**102**

E/S
**104**

103

110

10-i

## FIG. 6

FIG. 7A

FIG. 7B

FIG. 8

**Office européen**
**des brevets**

**RAPPORT PARTIEL**
**DE RECHERCHE EUROPEENNE**
qui selon la règle 45 de la Convention sur le brevet
européen est consideré, aux fins de la procédure ultérieure,
comme le rapport de la recherche européenne

Numéro de la demande

EP 03 29 2111

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| E | EP 1 355 233 A (FRANCE TELECOM) 22 octobre 2003 (2003-10-22) * le document en entier * --- | 13-20 | G06F9/50 |
| D,X | WO 00 57323 A (LAZAR AUREL ;SEMRET NEMO (US); UNIV COLUMBIA (US)) 28 septembre 2000 (2000-09-28) | 13-20 | |
| A | * le document en entier * --- | 21 | |
| A | US 5 640 569 A (HIBBERT CHRISTOPHER T ET AL) 17 juin 1997 (1997-06-17) * le document en entier * --- | 13-21 | |
| A | WO 99 06932 A (BUSINESSBOTS INC) 11 février 1999 (1999-02-11) * page 7, ligne 8 - page 11, ligne 23 * * figure 4 * --- -/-- | 13-21 | |

**DOMAINES TECHNIQUES RECHERCHES (Int.Cl.7)**

G06F

## RECHERCHE INCOMPLETE

La division de la recherche estime que la présente demande de brevet, ou une ou plusieurs revendications, ne sont pas conformes aux dispositions de la CBE au point qu'une recherche significative sur l'état de la technique ne peut être effectuée, ou seulement partiellement, au regard de ces revendications.

Revendications ayant fait l'objet d'une recherche complète:


Revendications ayant fait l'objet d'une recherche incomplète:

13-21

Revendications n'ayant pas fait l'objet d'une recherche:

1-12

Raison pour la limitation de la recherche:

Article 52 (2)(a) CBE - Méthode mathématique

| Lieu de la recherche | Date d'achèvement de la recherche | Examinateur |
|---|---|---|
| LA HAYE | 4 mars 2004 | Kielhöfer, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C08)

**EP 1 510 917 A1**

**Office européen**

**des brevets**

**RAPPORT PARTIEL
DE RECHERCHE EUROPEENNE**

Numero de la demande

EP 03 29 2111

| | DOCUMENTS CONSIDERES COMME PERTINENTS | | CLASSEMENT DE LA DEMANDE (Int.Cl.7) |
|---|---|---|---|
| Catégorie | Citation du document avec indication, en cas de besoin, des parties pertinentes | Revendication concernée | |
| A | SANDHOLM T: "Limitations of the Vickrey auction in computational multiagent systems" PROCEEDINGS OF ICMAS. INTERNATIONAL CONFERENCE ON MULTIAGENT SYSTEMS, XX, XX, 10 décembre 1996 (1996-12-10), pages 299-306, XP002092535 --- | | |
| A | SEMRET N ET AL: "PRICING, PROVISIONING AND PEERING: DYNAMIC MARKETS FOR DIFFERENTIATED INTERNET SERVICES AND IMPLICATIONS FOR NETWORK INTERCONNECTIONS" IEEE JOURNAL ON SELECTED AREAS IN COMMUNICATIONS, IEEE INC. NEW YORK, US, vol. 18, no. 12, décembre 2000 (2000-12), pages 2499-2513, XP001184748 ISSN: 0733-8716 ----- | | DOMAINES TECHNIQUES RECHERCHES (Int.Cl.7) |

EPO FORM 1503 03.82 (P04C11)

**ANNEXE AU RAPPORT DE RECHERCHE EUROPEENNE
RELATIF A LA DEMANDE DE BREVET EUROPEEN NO.**

EP 03 29 2111

La présente annexe indique les membres de la  famille de brevets relatifs aux documents  brevets cités dans le rapport de recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

04-03-2004

| Document brevet cité au rapport de recherche | | Date de publication | Membre(s) de la famille de brevet(s) | | Date de publication |
|---|---|---|---|---|---|
| EP 1355233 | A | 22-10-2003 | EP | 1355233 A1 | 22-10-2003 |
|  |  |  | US | 2004024687 A1 | 05-02-2004 |
| WO 0057323 | A | 28-09-2000 | WO | 0057323 A1 | 28-09-2000 |
|  |  |  | CA | 2332235 A1 | 28-09-2000 |
|  |  |  | JP | 2002540510 T | 26-11-2002 |
| US 5640569 | A | 17-06-1997 | AUCUN | | |
| WO 9906932 | A | 11-02-1999 | AU | 8600998 A | 22-02-1999 |
|  |  |  | WO | 9906932 A1 | 11-02-1999 |

EPO FORM P0460

Pour tout renseignement concernant cette annexe : voir Journal Officiel de l'Office européen des  brevets, No.12/82